# EUROPEAN PATENT APPLICATION

(11) **EP 4 324 534 A1**
(43) Date of publication of application: **21.02.2024**
(21) Application number: 22811119.1
(22) Date of filing: 27.04.2022
(51) Int. Cl.: A63F 13/63, A63F 13/35, A63F 13/45, A63F 13/812, H04L 67/02

(54) **CONTROL SYSTEM, INFORMATION SYSTEM, INFORMATION PROCESSING METHOD AND PROGRAM**

(30) Priority: 28.05.2021 JP 2021090272
(71) Applicant: Konami Digital Entertainment Co., Ltd., Tokyo 1040061 (JP)
(72) Inventor: CHIBA, Shigeru, Tokyo 104-0061 (JP); SAKAI, Akira, Tokyo 104-0061 (JP); INOUE, Kai, Tokyo 104-0061 (JP); HIRAI, Junki, Tokyo 104-0061 (JP); SHINPO, Tsuguo, Tokyo 104-0061 (JP); KANAHARA, Toshiaki, Tokyo 104-0061 (JP); NARITA, Yoshihiko, Tokyo 104-0061 (JP)
(74) Representative: Winter, Brandl - Partnerschaft mbB
(86) International application number: PCT/JP2022/019101
(87) International publication number: WO 2022/249845

(57) **Abstract**

A control system is a system that assists generation of a distribution content item representing progress of a video game played by a user. The control system includes: an information provision section configured to provide the user with address information representing an address of material data on an effect material used for the distribution content item; under a control condition set in accordance with instructions from the user, a material data control section configured to update the material data in conjunction with progress of the video game played by the user; and in conjunction with the progress of the video game played by the user, a material data transmission section configured to transmit the material data to the editing system based on a request that uses the address information from an editing system that generates the distribution content item.

## Description

### TECHNICAL FIELD

This invention relates to techniques for assisting generation of content items representative of progress of video games.

### BACKGROUND ART

A variety of techniques has been proposed for editing a video game image representative of progress of a video game. For example, Patent Document 1 discloses a configuration for generating a content item using video game data representing a state of a video game and synthesizing the content item into the video game image.

### Related Art Document

### Patent Document

Patent Document 1: Japanese Patent No. 6098691

### SUMMARY OF THE INVENTION

### Problems to be Solved by the Invention

It is widely known that users broadcast live gameplay, in which progress images of a video game being played by a user are distributed in conjunction with progress of the video game. It is difficult for the technique of Patent Document 1 to generate a variety of content items reflecting intentions or preferences of users because information on progress of the video game is merely incorporated into a video game image. In view of these circumstances, one aspect of this invention is to generate a variety of distribution content items reflecting intentions or preferences of users.

### Means for Solving the Problems

To solve the foregoing problems, a control system according to one aspect of this invention is a control system that assists generation of a distribution content item representing progress of a video game played by a user. The control system includes the following (i) to (iii): (i) an information provision section configured to provide the user with address information representing an address of material data on an effect material used for the distribution content item; (ii) under a control condition set in accordance with instructions from the user, a material data control section configured to update the material data in conjunction with progress of the video game played by the user; and (iii) in conjunction with the progress of the video game played by the user, a material data transmission section configured to transmit the material data to the editing system based on a request that uses the address information from an editing system that generates the distribution content item.

An information system according to one aspect of this invention includes a recording system; and a control system. The recording system includes the following (i) to (iv): (i) a game control section configured to progress a video game played by a user; (ii) a condition setting section configured to set a control condition in accordance with instructions from the user; (iii) a material data acquisition section configured to acquire material data on an effect material from the control system; and (iv) an edit processing section configured to generate a distribution content item including: a play material representing progress of the video game, and the effect material indicated by the material data. The control system includes the following (i) to (iii): (i) an information provision section configured to provide the user with address information representing an address of the material data; (ii) under the control condition, a material data control section configured to update the material data in conjunction with the progress of the video game played by the user; and (iii) in conjunction with the progress of the video game played by the user, a material data transmission section configured to transmit the material data to the recording system based on a request that uses the address information from the recording system.

An information processing method according to one aspect of this invention is a method for assisting generation of a distribution content item representing progress of a video game played by a user. The information processing method includes the following (i) to (iii): (i) providing the user with address information representing an address of material data on an effect material used for the distribution content item; (ii) under a control condition set in accordance with instructions from the user, updating the material data in conjunction with progress of the video game played by the user; and (iii) in conjunction with the progress of the video game played by the user, transmitting the material data to the editing system based on a request that uses the address information from an editing system that generates the distribution content item.

A program according to one aspect of this invention is a program for assisting generation of a distribution content item representing progress of a video game played by a user. The program causes a computer system to function as the following (i) to (iii): (i) an information provision section configured to provide the user with address information representing an address of material data on an effect material used for the distribution content item; (ii) under a control condition set in accordance with instructions from the user, a material data controller configured to update the material data in conjunction with progress of the video game played by the user; and (iii) in conjunction with the progress of the video game played by the user, a material data transmission section configured to transmit the material data to the editing system based on a request that uses the address information from an editing system that generates the distribution content item.

### BRIEF DESCRIPTION OF THE DRAWINGS

FIG. 1 is a block diagram illustrating a configuration of an information system according to a first embodiment.
FIG. 2 is a schematic diagram of a distribution content item.
FIG. 3 is a block diagram illustrating a configuration of a gaming device.
FIG. 4 is an explanatory diagram of control conditions.
FIG. 5 is a block diagram illustrating a configuration of an editing system.
Fig. 6 is a block diagram illustrating a configuration of a control system.
FIG. 7 is an explanatory diagram of an effect material.
FIG. 8 is a block diagram illustrating a functional configuration of the information system.
FIG. 9 is a flowchart illustrating procedures for initial settings.
FIG. 10 is a flow chart illustrating procedures executed by the gaming device in first preparation processing.
FIG. 11 is a flow chart illustrating procedures executed by the control system in the first preparation processing.
FIG. 12 is a flowchart illustrating procedures executed by the editing system in second preparation processing.
FIG. 13 is a flow chart illustrating procedures executed by the editing system in edit processing.
FIG. 14 is a flow chart illustrating procedures executed by the control system edit in the edit processing.
FIG. 15 is a flow chart illustrating procedures executed by the gaming device in the edit processing.
FIG. 16 is a block diagram illustrating a configuration of an information system according to a second embodiment.
FIG. 17 is a schematic diagram illustrating a distribution content item according to the second embodiment.
FIG. 18 is an explanatory diagram of control conditions according to the second embodiment.
FIG. 19 is a block diagram illustrating a configuration of a control system according to the second embodiment.
FIG. 20 is an explanatory diagram of an effect material according to the second embodiment.
FIG. 21 is a block diagram illustrating a functional configuration of the information system according to the second embodiment.
FIG. 22 is a flow chart illustrating procedures executed by the gaming device in first preparation processing.
FIG. 23 is a flow chart illustrating procedures executed by the control system in the first preparation processing.
FIG. 24 is a flowchart illustrating procedures executed by the editing system in the second preparation processing.
FIG. 25 is a flow chart illustrating procedures executed by the editing system in the edit processing.
FIG. 26 is a flow chart illustrating procedures executed by the control system edit in the edit processing.
FIG. 27 is a flow chart illustrating procedures executed by the gaming device in the edit processing.
FIG. 28 is a block diagram illustrating a functional configuration of a control system according to a third embodiment.
FIG. 29 is a flowchart of procedures executed by the control system according to third embodiment.
FIG. 30 is a block diagram illustrating a functional configuration of the control system according to the third embodiment.
FIG. 31 is a flowchart of procedures executed by the control system according to the third embodiment.

### MODES FOR CARRYING OUT THE INVENTION

Embodiments of this invention will be described with reference to the drawings. The embodiments described below include a variety of limitations that are technically appropriate. The scope of this invention is not limited to the embodiments below.

### First Embodiment

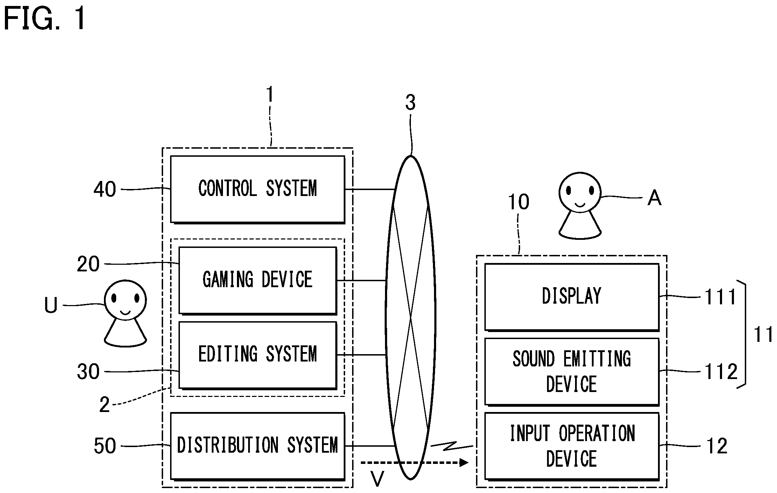

FIG. 1 is a block diagram illustrating a configuration of an information system 1 according to the first embodiment. The information system 1 is a computer system that distributes to terminal apparatuses 10, a content item V relating to a video game being played by a user U (hereinafter, "distribution content item"). In the first embodiment, an example will be given of a baseball video game in which two teams, each being composed of game characters (hereinafter, "player characters"), play against each other.

A distribution content item V refers to information for viewers and includes images (video images or still images) and sounds. The distribution content item V according to the first embodiment is a live gameplay, in which playing the baseball video game, the user U is describing progress thereof. The distribution content item V is distributed to each terminal apparatus 10 in real time (i.e., live streaming) in conjunction with the progress of the baseball video game. The user U is a player of the baseball video game as well as a producer or distributor of the distribution content item V.

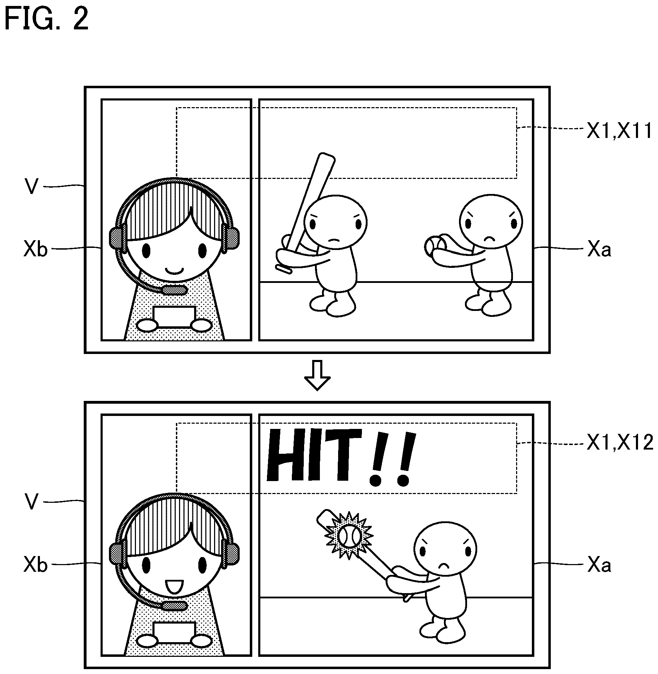

FIG. 2 is a schematic diagram illustrating a distribution content item V. As illustrated in FIG. 2, the distribution content item V includes materials X (Xa, Xb, and X1). Each material X is an element (source) of the distribution content item V and includes one of or both of an image and a sound. The distribution content item V according to the first embodiment includes a play material Xa, a recording material Xb, and an effect material X1.

The play material Xa represents progress of the baseball video game played by the user U. The recording material Xb represents how the user U is live commenting on progress of the baseball video game, playing the baseball video game. For example, the recording material Xb includes an image and a voice of the user U who is playing the baseball video game.

The effect material X1 represents rendering that follows the state of the baseball video game. For example, in response to an occurrence of an event, such as a home run in the baseball video game, an effect material X1 for rendering of the event is played back. In FIG. 2, an example is given of decorative characters "HIT! !," which represent a hitting sound of the effect material X1. The hitting sound is generated when a ball is hit by a baseball bat. The effect material X1 is shown over both the play material Xa and the recording material Xb. At least one effect material X1 is arranged in the distribution content item V. In the first embodiment, it is envisaged that the play material Xa and the recording material Xb each include an image (a video image or a still image) and a sound, and the effect material X1 includes an image (a video image or a still image). Examples of the effect material X1 in English includes "HIT!"

A terminal apparatus 10 shown in FIG. 1 plays back the distribution content item V. Examples of the terminal apparatus 10 include a portable or stationary information device, such as a mobile phone, a smartphone, a tablet, and a personal computer. The terminal apparatus 10 may be a display, such as a television receiver.

The terminal apparatus 10 includes a playback device 11, and an input operation device 12. The playback device 11 plays back the distribution content item V. The playback device 11 includes a display 111, and a sound emitting device 112. The display 111 shows an image of a distribution content item V. The sound emitting device 112 emits sound of the distribution content item V. The input operation device 12 is an input device that receives input operations of a user (hereinafter, a "viewer") A of the terminal apparatus 10. The distribution content item V is watched by the viewer A. The distribution content item V may be played back by a general browser, or a dedicated application program.

As illustrated in FIG. 1, the information system 1 includes a recording system 2, a control system 40, and a distribution system 50. The recording system 2, the control system 40 and the distribution system 50 communicate with each other via a network 3, such as the Internet.

The recording system 2 generates a distribution content item V. The control system 40 controls the effect material X1 within the distribution content item V based on the state of the baseball video game. The distribution system 50 distributes the distribution content item V generated by the recording system 2 to each terminal apparatus 10. The distribution system 50 executes the following (i) and (ii) in parallel: (i) reception of the distribution content item V generated by the recording system 2; and (ii) transmission thereof to each terminal apparatus 10. For example, the distribution system 50 is configured by a known video distribution server (e.g., a streaming server). Detailed description of the distribution system 50 will be omitted.

As illustrated in FIG. 1, the recording system 2 includes a gaming device 20, and an editing system 30. The gaming device 20 controls the baseball video game. Examples of the gaming device 20 include portable information devices such as a smartphone and a tablet, and a stationary information device such as a personal computer. The gaming device 20 may be a portable or stationary gaming console. The editing system 30 is a computer system that generates a distribution content item V. Examples of the editing system 30 include a portable information device, such as a smartphone and a tablet, and stationary information device such as a personal computer. The gaming device 20 and the editing system 30 each communicates with the recording system 2 via the network 3. In the first embodiment, an example is given in which the gaming device 20 and the editing system 30 are separate from each other.

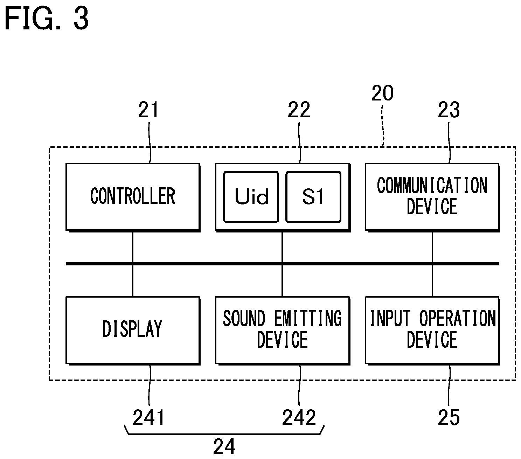

FIG. 3 is a block diagram illustrating a configuration of the gaming device 20. As illustrated in FIG. 3, the gaming device 20 is a computer system including a controller 21, a storage device 22, a communication device 23, a playback device 24, and an input operation device 25. The gaming device 20 may be configured by a single device, or it may be configured by more than one device separated from each other.

The controller 21 comprises one or more processors that control each element of the gaming device 20. Specifically, the controller 21 comprises one or more processors, such as Central Processing Sections (CPUs), Graphics Processing Sections (GPUs), Digital Signal Processors (DSPs), Field Programmable Gate Arrays (FPGAs), or Application Specific Integrated Circuits (ASICs). The communication device 23 communicates with the control system 40 via the network 3. Furthermore, the communication device 23 communicates with the editing system 30.

The playback device 24 plays back an image and a sound that depend on the progress of the baseball video game under control of the controller 21. Specifically, the playback device 24 includes a display 241, and a sound emitting device 242. The display 241 shows an image that depends on the progress of the baseball video game (hereinafter, a "game image"). The sound emitting device 242 emits sound that depends on the progress of the baseball video game. The image of the play material Xa within the distribution content item V is an image similar to that of the game image shown on the display 241. However, the play material Xa may not be the same as the game image. The play material Xa may be generated by synthesizing a frame image for decoration in a game image. The input operation device 25 is an input device that receives input operations of the user U. The input operation device 25 is operated by the user U to play the baseball video game.

The storage device 22 comprises one or more memories that store a program executed by the controller 21, and a variety of types of data used by the controller 21. A known recording medium, such as a semiconductor recording medium and a magnetic recording medium, or a combination of a plurality of recording media, is used as a storage device 22. A portable recording medium that is detachable from the gaming device 20 may be used as the storage device 22. Alternatively, a recording medium (e.g., a cloud storage) that is writable or readable by the controller 21 via the network 3 may be used as the storage device 22.

The storage device 22 according to the first embodiment stores identification information Uid and setting data S1. The identification information Uid is a sequence of codes to identify the user U. The setting data S1 represents a variety of conditions (hereinafter, "control conditions") Y1 relating to the control of the effect material X1. Each control condition Y1 is set in accordance with instructions from the user U on the input operation device 25. That is, each control condition Y1 is set by the user U.

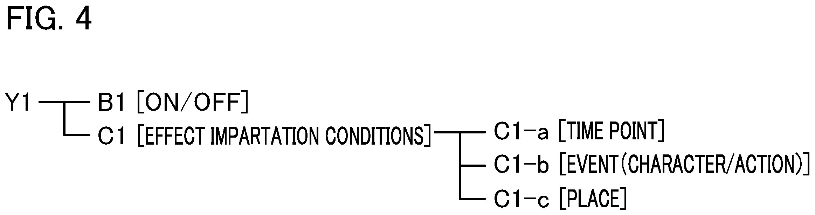

FIG. 4 is an explanatory diagram of the control conditions Y1. As illustrated in FIG. 4, the control conditions Y1 indicated by setting data S1 include a basic condition B1, and effect impartation conditions C1 (C1-a, C1-b, C1-c, ...). That is, the setting data S1 includes data indicating the basic condition B1 and data indicating the effect impartation conditions C1. The basic condition B1 relates to whether to use the effect material X1 and is set to an active state (ON) or an inactive state (OFF). When the basic condition B1 is an active state, the effect material X1 is shown within the distribution content item V. When the basic condition B1 is an inactive state, the effect material X1 is not shown therein. Thus, according to the first embodiment, the user U can freely select to show or update the effect material X1.

The effect impartation conditions C1 are to control the effect material X1 within the distribution content item V (e.g., to be shown, or to be updated), when the basic condition B1 is an active state. Specifically, the effect impartation conditions C1 to be set relate to progress of the baseball video game. It changes over time whether the effect impartation conditions C1 are met based on the state of the baseball video game. When specific one or more of the effect impartation conditions C1 are met during the progress of the baseball video game, the effect material X1 within the distribution content item V is controlled (e.g., is shown, or is updated). According to such a configuration, it is possible to include the appropriate effect material X1 within the distribution content item V based on the state of the baseball video game.

The effect impartation conditions C1 include a condition C1-a relating to a time point in the baseball video game. When a specific time point arrives in the baseball video game, it is determined that the effect impartation condition C1-a is met. Examples of the effect impartation condition C1-a include a time point at which a specific inning is started in the baseball video game, and a time point at which a specific situation occurs in the baseball video game. Examples of the specific inning indicated as the effect impartation condition C1-a include a last inning of a game (nine times). Examples of the specific situation indicated as the effect impartation condition C1-a include a situation in which the team of the user U will reverse the team of the opponent; a situation in which the team of the opponent will reverse the team of the user U; a situation of a full base; and other critical situations that directly affect an outcome of the baseball video game. According to this configuration, the effect material X1 provides effective rendering of arrival of a specific time point in the baseball video game, and thereby a distribution content item V reflecting such a rendering can be generated.

The effect impartation conditions C1 further include a condition C1-b relating to an event that will occur in the baseball video game. When a specific event occurs in the baseball video game, it is determined that the effect impartation condition C1-b is met. Examples of the event indicated as the effect impartation condition C1-b include an event relating to a specific player character in the baseball video game, and an event relating to a specific action by any player character. Examples of the event relating to the specific player character include an event in which a specific player character that belongs to the team of the user U will appear; an event in which a specific player character that belongs to the opponent team will appear; and an event in which any player character that belongs to the team of the user U will appear. Examples of the event relating to the specific action include an action by which a batter achieves a home run; an action by which a pitcher gets a strikeout; and an action by which a runner steals a base. In the foregoing description, the effect impartation condition C1-b relating to an event is independent from the effect impartation condition C1-b relating to an action; however, the effect impartation condition C1-b may be a set of both. For example, the effect impartation condition C1-b may be an occurrence of an event in which a specific player character will achieve a home run. According to this configuration, the effect material X1 provides the effective rendering of an occurrence of a specific event in the baseball video game, and thereby a distribution content item V reflecting such a rendering can be generated.

The effect impartation conditions C1 further include a condition C1-c relating to a virtual location at which a game is held in the baseball video game. For example, a game in the baseball video game may be selectively held at a virtual location, such as a playing field. When a game in the baseball video game is held in a specific stadium, it is determined that the effect impartation condition C1-c is met. According to this configuration, an effective rendering of a specific location in the baseball video game is implemented by the effect material X1.

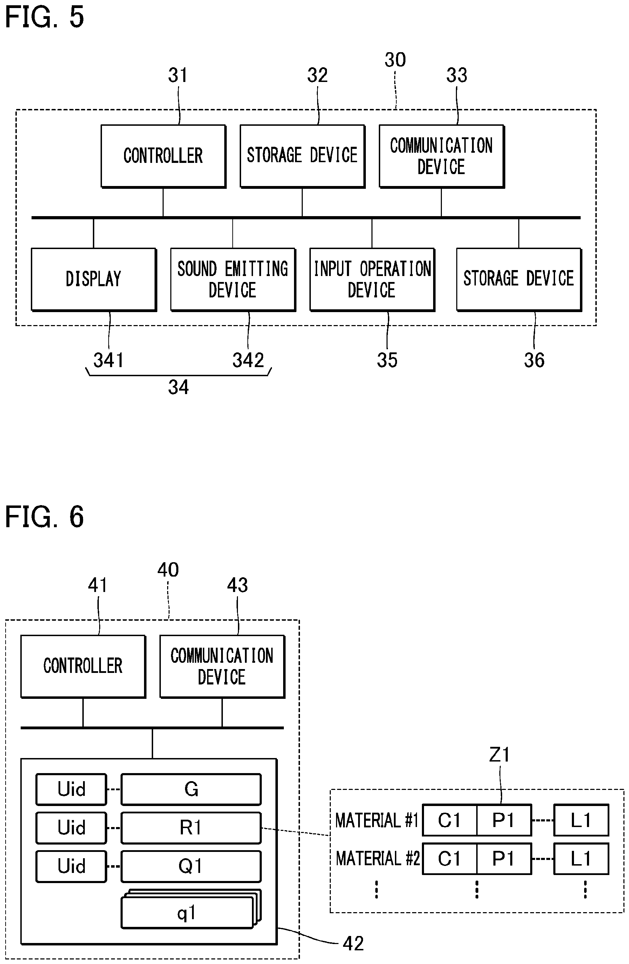

FIG. 5 is a block diagram illustrating a configuration of the editing system 30. As illustrated in FIG. 5, the editing system 30 is a computer system including a controller 31, a storage device 32, a communication device 33, a playback device 34, an input operation device 35, and a recording device 36. The editing system 30 may be implemented by a single device, or it may be implemented by more than one device separated from each other.

The controller 31 comprises one or more processors that control each element of the editing system 30. Specifically, the controller 31 comprises one or more processors, such as, CPUs, GPUs, DSPs, FPGAs and ASICs.

The storage device 32 comprises one or more memories that store a program executed by the controller 31, and a variety of types of data used by the controller 31. Specifically, Open Broadcaster Software (OBS), which is for generation and distribution of a distribution content item V, is stored in the storage device 32. A known recording medium, such as a semiconductor recording medium and a magnetic recording medium, or a combination of a plurality of recording media, is used as a storage device 32. A portable recording medium that is detachable from the editing system 30 may be used as the storage device 32. Alternatively, a recording medium (e.g., a cloud storage) that is writable or readable by the controller 31 via the network 3 may be used as the storage device 32.

The communication device 33 communicates with the control system 40 via the network 3. Furthermore, the communication device 33 communicates with the gaming device 20. Wired or wireless communication may be applied to communication between the gaming device 20 (the communication device 23) and the editing system 30 (the communication device 33). The network 3 may or may not be applied to communication between the gaming device 20 and the editing system 30. Near field communication may be applied to communication between the gaming device 20 and the editing system 30. In the first embodiment, material data Qa on the play material Xa representative of the progress of the baseball video game is transmitted from the gaming device 20 to the editing system 30.

Under control by the controller 31, the playback device 34 plays back an image and a sound to be viewed by the user U to edit a distribution content item V. Specifically, the playback device 34 includes a display 341, and a sound emitting device 342. The display 341 shows an image (edit screen) for editing the distribution content item V. The sound emitting device 342 emits sound for editing the distribution content item V.

The input operation device 35 is an input device that receives input operations of the user U. For example, the input operation device 35 receives from the user U, instructions to place materials X (Xa, Xb, and X1) within the distribution content item V or instructions on positions of the materials X. In the first embodiment, it is envisaged that a player of the baseball video game and a distributor of the distribution content item V (an operating person of the editing system 30) are one and the same user U. However, they may be different from each other. There may be more than one user U.

The recording device 36 is a video device that is used to record how the user U is playing the baseball video game. The recording device 36 includes a camera that records images (video images) of the user U, and a sound receiver that records voice of the user U. The recording device 36 generates material data Qb on the recording material Xb including an image and a sound of the user U.

Fig. 6 is a block diagram illustrating a configuration of the control system 40. As illustrated in FIG. 6, the control system 40 is a computer system including a controller 41, a storage device 42, and a communication device 43. The control system 40 may be a single device, or it may be more than one device separated from each other.

The controller 41 comprises one or more processors that control each element of the control system 40. Specifically, the controller 41 comprises one or more processors, such as CPUs, GPUs, DSPs, FPGAs, and ASICs. The communication device 43 communicates with the gaming device 20 and the editing system 30 via the network 3.

The storage device 42 comprises one or more memories that store a program executed by the controller 41, and a variety of types of data used by the controller 41. A known recording medium, such as a semiconductor recording medium and a magnetic recording medium, or a combination of a plurality of recording media, is used as a storage device 42. A portable recording medium that is detachable from the control system 40 may be used as the storage device 42. Alternatively, a recording medium (e.g., a cloud storage) that is writable or readable by the controller 41 via the network 3 may be used as the storage device 42.

As illustrated in FIG. 6, the storage device 42 stores user data G, reference data R1, material data Q1, and pieces of basic data q1. For each user U, the user data G, the reference data R1, and the material data Q1 are stored. Specifically, the user data G, the reference data R1 and the material data Q1 are associated with an identification information Uid of the user U and are stored in the storage device 42.

The user data G relates to the user U. Specifically, the user data G is information on a gameplay of the baseball video game played by the user U in the past. Specifically, the user data G is game data including a play history (e.g., competition game record) of the baseball video game played by the user U, and ability values of player characters that constitute the baseball team of the user U.

The material data Q1 represents an effect material X1, which is used for the distribution content item V of the user U. Specifically, examples of the material data Q1 include image data representing an image of the effect material X1.

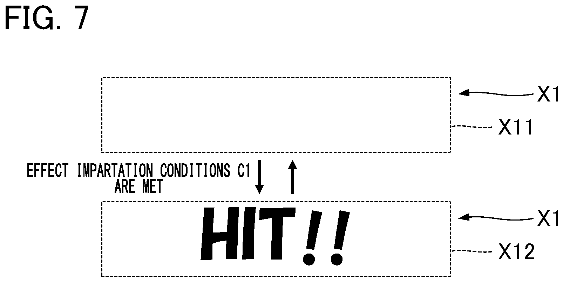

FIG. 7 is an explanatory diagram of an effect material X1 indicated by the material data Q1. The effect material X1 is a video including a transparent image X11, and a display element X12. The transparent image X11 is transparent to an image thereunder, and therefore the image is see-through. Examples of the transparent image X11 include a transparent GIF (Graphics Interchange Format) image, which has a predetermined size and is transparent over the entire image. The display element X12 is an image for rendering that is viewable by the viewer A. FIG. 7 shows, as an example of the display element X12, the decorative characters "Hit! !" representing a hitting sound.

As described above, the material data Q1 is updated when the effect impartation conditions C1 are met. Specifically, as illustrated in FIG. 7, when no effect impartation conditions C1 are met, the effect material X1 includes the transparent image X11. The effect material X1 cannot be seen by the viewer A. In contrast, when the effect impartation conditions C1 are met, the effect material X1 is generated by synthesizing a display element X12 in the transparent image X11. The effect material X1 (display element X12) can be seen by the viewer A. When a predetermined delete condition is met after the effect impartation conditions C1 are met, the display element X12 is deleted. The effect material X1 transitions to a transparent state in which the effect material X1 includes the transparent image X11. The delete condition is that a predetermined period elapses from display of the display element X12. Thus, in the first embodiment, the effect material X1 is generated by synthesizing the display element X12 in the transparent image X11. As a result, it is not required to determine whether the effect material X1 (display element X12) is acquired by the editing system 30.

The pieces of basic data q1 shown in FIG. 6 represent images used to generate the material data Q1 for the user U. For example, pieces of basic data q1 include basic data q1 representing the transparent image X11, and basic data q1 representing the display element X12. The pieces of basic data q1 are stored in the storage device 42.

The reference data R1 includes pieces of unit data Z1, each corresponding to an effect material X1 used for the distribution content item V of the user U. Each of the pieces of unit data Z1 indicates a set of effect impartation conditions C1 and a control mode P1. The control mode P1 associated with the effect impartation conditions C1 refers to how the effect material X1 is updated when the effect impartation conditions C1 are met (a scenario of how the effect material X1 is updated). In an example in FIG. 7, a control mode P1 indicates a set of the following (i) and (ii): (i) the transparent image X11 shown when no effect impartation conditions C1 are met; and (ii) the display element X12 shown when the effect impartation conditions C1 are met. Thus, the reference data R1 indicates a set of effect impartation conditions C1 and a control mode P1, both of which are set in accordance with instructions from the user U on the gaming device 20.

As will be apparent from the description, the material data Q1 according to the first embodiment is updated by the control mode P1 included in the reference data R1 when the effect impartation conditions C1 registered in the reference data R1 are met. Specifically, the display element X12 is shown when the effect impartation conditions C1 are met.

As illustrated in FIG. 6, address information L1 is associated with each piece of unit data Z1 included in the reference data R1 and is stored. That is, address information L1 is stored for each effect material X1 used for the distribution content item V of the user U. The address information L1 is data representing an address of the material data Q1 in the storage device 42. Specifically, the address information L1 to be used is a Uniform Resource Locator (URL) of the material data Q1. The address information L1 is supplied to the user U by the control system 40. The editing system 30 receives from the control system 40, the material data Q1 stored at an address indicated by the address information L1. As will be apparent from the description, the address information L1 is data for acquiring the material data Q1 by the editing system 30 from the control system 40 (data for identifying the material data Q1).

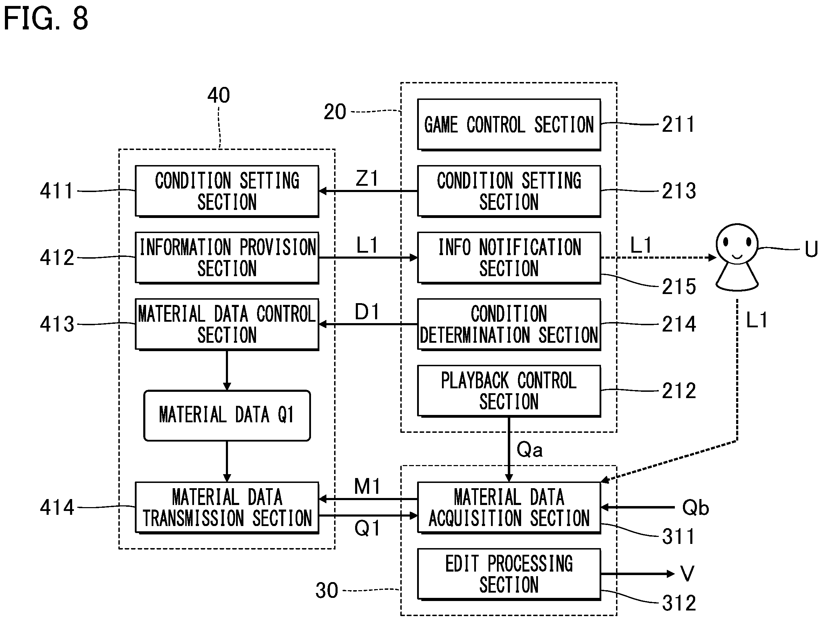

FIG. 8 is a block diagram illustrating a functional configuration of the information system 1. As illustrated in FIG. 8, the controller 21 of the gaming device 20 executes a program stored in the storage device 22 to implement functions (a game control section 211, a playback control section 212, a condition setting section 213, a condition determination section 214, and an information notification section 215).

The game control section 211 progresses the baseball video game in response to an input operation of the user U on the input operation device 25. The playback control section 212 causes the playback device 24 to play back an image and a sound of the baseball video game. Specifically, the playback control section 212 causes the display 241 to show a game image representing the progress of the baseball video game. Furthermore, the playback control section 212 causes the sound emitting device 242 to emit a variety of sounds, such as sound effects. The playback control section 212 generates material data Qa on the play material Xa representing the progress of the baseball video game. The material data Qa is transmitted from the communication device 23 to the editing system 30. It is noted that the playback control section 212 does not necessarily generate the material data Qa on the play material Xa for the distribution content item V use only. The playback control section 212 may only output data representing a game image and a sound of the baseball video game (e.g., data supplied to the playback device 24). The editing system 30 acquires as the material data Qa the data output from the gaming device 20.

The condition setting section 213 sets control conditions Y1 (the basic condition B1 and the effect impartation conditions C1) in accordance with instructions from the user U on the input operation device 25. For example, the condition setting section 213 sets the effect impartation conditions C1 and the control mode P1 in accordance with instructions from the user U. Furthermore, the condition setting section 213 transmits to the control system 40, unit data Z1 representing a set of the effect impartation conditions C1 and the control mode P1.

The condition determination section 214 determines whether the control conditions Y1 (the effect impartation conditions C1) set by the condition setting section 213 are met. The determination by the condition determination section 214 is executed in conjunction with the progress of the baseball video game. That is, from time to time, the condition determination section 214 determines whether the control conditions Y1 are met during the progress of the baseball video game. In the first embodiment, the condition determination section 214 generates state data D1 representing the result of determination of whether the control conditions Y1 are met. Specifically, the state data D1 indicates the effect impartation conditions C1 that have been met in the baseball video game. The state data D1 is transmitted from the communication device 23 to the control system 40.

The information notification section 215 notifies the user U of address information L1 provided from the control system 40. For example, the information notification section 215 shows the address information L1 on the display 241. The notification by the information notification section 215 allows the user U to know the address information L1. The user U operates the input operation device 35 of the editing system 30 to input the address information L1 into the editing system 30. The editing system 30 acquires the address information L1 representing the address of the material data Q1 stored in the control system 40.

As illustrated in FIG. 8, the controller 21 of the editing system 30 executes a program (OBS) stored in the storage device 22 to implement functions (a material data acquisition section 311 and an edit processing section 312).

The material data acquisition section 311 acquires pieces of material data Q (Qa, Qb, and Q1). The pieces of material data Q are acquired by the material data acquisition section 311 continuously in conjunction with the progress of the baseball video game. Specifically, the material data acquisition section 311 acquires material data Qa on the play material Xa from the gaming device 20. Furthermore, the material data acquisition section 311 acquires material data Qb on the recording material Xb from the recording device 36. The material data acquisition section 311 acquires material data Q1 on the effect material X1 from the control system 40. Specifically, the material data acquisition section 311 acquires the material data Q1 stored at the address indicated by the address information L1 from the control system 40 by transmitting material request M1 including the address information L1 to the control system 40.

The edit processing section 312 generates a distribution content item V using materials X (Xa, Xb, and X1) indicated by the pieces of material data Q (Qa, Qb, and Q1) acquired by the material data acquisition section 311. As described with reference to FIG. 2, the edit processing section 312 generates a distribution content item V including a play material Xa, a recording material Xb, and an effect material X1. The distribution content item V includes a sound indicated by the play material Xa, and a sound indicated by the recording material Xb.

As illustrated in FIG. 8, the controller 41 of the control system 40 executes a program stored in the storage device 42 to implement functions (a condition setting section 411, an information provision section 412, a material data control section 413, and a material data transmission section 414).

The condition setting section 411 generates reference data R1 defining a relationship between the control conditions Y1 (the effect impartation conditions C1) and the control mode P1. Specifically, for each effect material X1, the condition setting section 411 adds to the reference data R1, a piece of unit data Z1 received from the gaming device 20. The information provision section 412 provides the user U with the address information L1 for each effect material X1.

The material data control section 413 controls the effect material X1 indicated by the material data Q1. Specifically, the material data control section 413 updates the effect material X1 based on the state data D1 transmitted from the gaming device 20. As described above, the state data D1 represents whether the effect impartation conditions C1 are met. The material data control section 413 updates the effect material X1 used for the distribution content item V of the user U under the control conditions Y1 (the effect impartation conditions C1) set by the user U.

The material data transmission section 414 transmits the material data Q1 indicated by the address information L1 to the requesting editing system 30 based on the material request M1 that uses the address information L1 from the editing system 30. The following (i) and (ii) are executed in conjunction with the progress of the baseball video game: (i) control of the effect material X1 by the material data control section 413; and (ii) transmission of the material data Q1 by the material data transmission section 414.

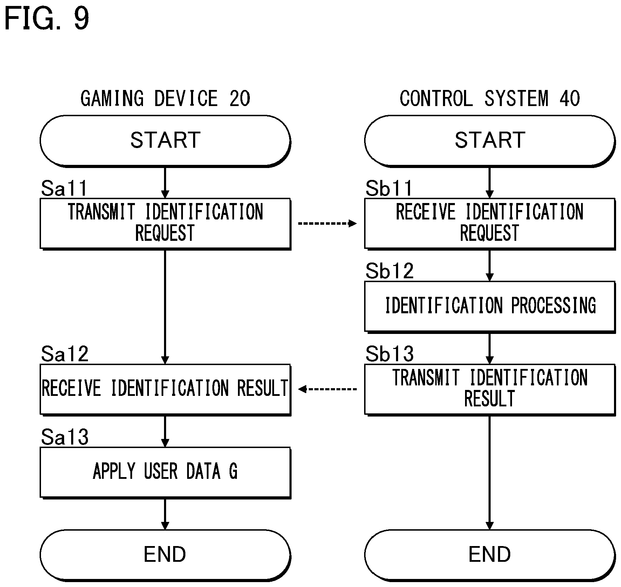

Procedures executed by the information system 1 will be described. FIG. 9 is a flowchart illustrating procedures for initial settings executed immediately after a start of the baseball video game.

The controller 21 of the gaming device 20 transmits an identification request to the control system 40 via the communication device 23 (Sa11). The identification request includes identification information Uid of a user U. The controller 41 of the control system 40 receives the identification request (Sb11) via the communication device 43 and executes identification processing using the identification information Uid (Sb12). By the identification processing, validity of the user U (the registered valid user) is confirmed. Biometric information of the user U or supplementary information, such as Personal Identification Numbers, may be used for the identification processing. The controller 41 transmits a result of the identification to the requesting gaming device 20 (Sb13). When the identification processing is successful, the result of the identification including user data G of the user U is transmitted from the control system 40. The controller 41 stores in the storage device 42, the identification information Uid of the user U who was successfully identified. The user U who generates the distribution content item V is identified.

The controller 21 of the gaming device 20 receives the result of identification via the communication device 23 (Sa12). When the identification processing is successful, the controller 21 applies the user data G included in the result of the identification to the baseball video game (Sa13). The status of gameplay executed by the user U in the past is played back. When the identification processing fails, the user U is notified of failure of the identification.

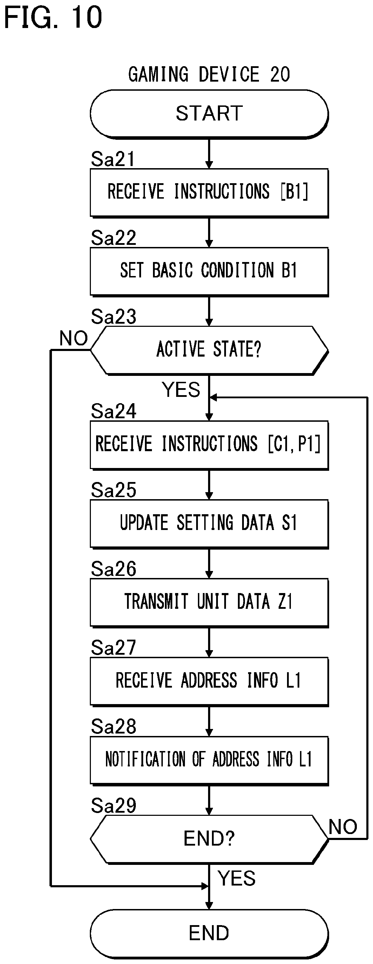

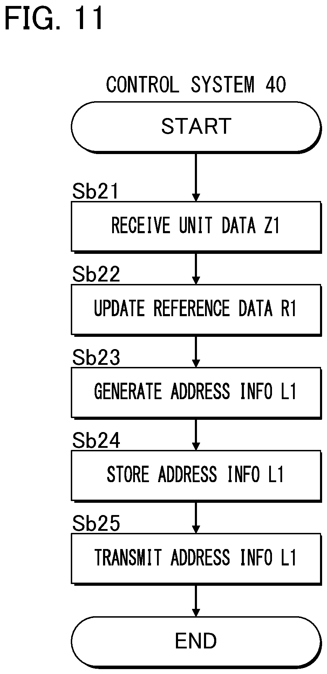

FIGS. 10 and 11 each are a flow chart illustrating procedures for preparing generation of a distribution content item V (hereinafter, "first preparation processing"). The first preparation processing is executed prior to a start of the baseball video game played by the user U. The first preparation processing includes a setting of control conditions Y1 and an issue of address information L1.

By operating the input operation device 25, the user U provides the gaming device 20 with instructions on whether an effect material X1 (the basic condition B1) is to be used for a user's distribution content item V. That is, the user U selects either an active state or an inactive state for the basic condition B1. When the first preparation processing is started, the controller 21 (the condition setting section 213) of the gaming device 20 receives the instructions on the basic condition B1 from the user U (Sa21). The controller 21 (the condition setting section 213) sets the basic condition B1 indicated by the setting data S1 to a state indicated by the user U (an active state or an inactive state) (Sa22). The controller 21 (the condition setting section 213) determines whether the basic condition B1 is set to an active state (Sa23). When the basic condition B1 is set to the inactive sate (Sa23: NO), the controller 21 terminates the first preparation processing without the following procedures.

The user U, who has indicated the active state as the basic condition B1, operates the input operation device 25 to indicate a set of effect impartation conditions C1 and a control mode P1 for each effect material X1 that is used for the user's distribution content item V. For example, as the effect impartation conditions C1, one or more of the prepared options may be selected by the user U. In addition, as the control mode P1, any of the prepared options is selected by the user U. When the basic condition B1 is set to an active state (Sa23: YES), the controller 21 (the condition setting section 213) receives from the user U, instructions on the set of the effect impartation conditions C1 and the control mode P1 (Sa24). The controller 21 (the condition setting section 213) sets the effect impartation conditions C1 indicated by the setting data S1 to the conditions indicated by the user U (Sa25). The controller 21 (the condition setting section 213) transmits via the communication device 23 to the control system 40, unit data Z1 representing the set of the effect impartation conditions C1 and the control mode P1 both indicated by the user U (Sa26). The identification information Uid of the user U is added to the unit data Z1.

As illustrated in FIG. 11, the controller 41 (the condition setting section 411) of the control system 40 receives the unit data Z1 from the gaming device 20 via the communication device 43 (Sb21). The controller 41 (the condition setting section 411) searches the storage device 42 for reference data R1 associated with the identification information Uid, which is added to the unit data Z1. The controller 41 then adds the unit data Z1 to the reference data R1 (Sb22). For one effect material X1, the relationship between the effect impartation conditions C1 and the control mode P1 both indicated by the user U is registered in the reference data R1.

The controller 41 (the information provision section 412) generates address information L1 relating to the material data Q1 on the effect material X1 of the present registration (Sb23). The address information L1 representing an address of the stored material data Q1 is generated. The controller 41 (the information provision section 412) stores the address information L1 associated with the unit data Z1 (Sb24). The unit data Z1 corresponds to the effect material X1 and is included in the reference data R1. The controller 21 (the information provision section 412) transmits the address information L1 via the communication device 43 to the gaming device 20 (Sb25). The address information L1 representing the address of the material data Q1 on the effect material X1 is provided to the user U who has indicated the effect material X1.

As illustrated in FIG. 10, the controller 21 (the information notification section 215) of the gaming device 20 receives the address information L1 from the control system 40 via the communication device 23 (Sa27). The controller 21 (the information notification section 215) notifies the user U of the address information L1 (Sa28). Specifically, the address information L1 is shown on the display 241.

The controller 21 determines whether a predetermined termination condition is met (Sa29). For example, when a termination instruction is entered to the input operation device 25 by the user U, it is determined that the termination condition is met. When the termination condition is not met (Sa29: NO), the controller 21 advances the processing to Step Sa24. For each time the set of the effect impartation conditions C1 and the control mode P1 is indicated by the user U for one effect material X1, the following (i) to (iii) are executed: (i) updating of the setting data S1 (Sa24 and Sa25); (ii) updating of the reference data R1 (Sa26, Sb21 and Sb22); and (iii) provision of the address information L1 (Sb23 to Sb25, Sa27 and Sa28).

In contrast, when the termination condition is met (Sa29: YES), the controller 21 terminates the first preparation processing. As will be apparent from the description, the association of the effect impartation conditions C1 indicated by the user U with the effect material X1 is registered, and notification of the address information L1 associated with each effect material X1 is received by the user U.

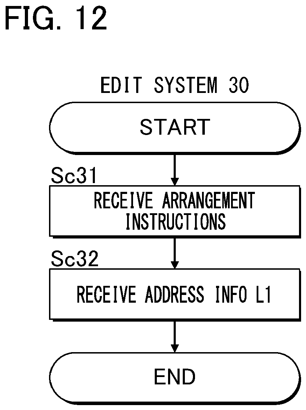

FIG. 12 is a flowchart illustrating procedures for preparing generation of a distribution content item V (hereinafter, "second preparation processing"). The second preparation processing is executed after an execution of the first preparation processing, before a start of the baseball video game played by a user U. When the second preparation processing is started, the user U knows address information L1 for each effect material X1.

By operating the input operation device 35, the user U indicates arrangement of the effect material X1 within the distribution content item V. The controller 31 (the edit processing section 312) of the editing system 30 receives from the user U, instructions on arrangement of the effect material X1 (Sc31). The instructions from the user U include indicating a position of the effect material X1 within the distribution content item V.

The user U operates the input operation device 35 to input the address information L1 on the effect material X1 into the editing system 30. The controller 31 (the material data acquisition section 311) receives an input of the address information L1 from the user U (Sc32). The address information L1 is stored in the storage device 32. The following (i) and (ii) are executed for each effect material X1 arranged in the distribution content item V: (i) reception of instructions on the effect material X1 (Sc31); and (ii) reception of the address information L1 associated with the effect material X1 (Sc32).

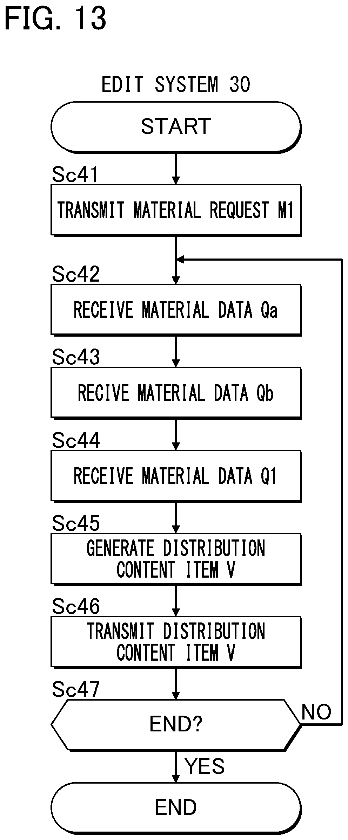

FIGS. 13 to 15 each are a flow chart illustrating procedures for generating a distribution content item V (hereinafter, "edit processing"). The edit processing is executed after an execution of the first and second preparation processing. When the first and second preparation processing are executed, the user U operates the input operation device 35 to provide the editing system 30 with instructions to generate a distribution content item V. Furthermore, the user U operates the input operation device 25 to provide the gaming device 20 with instructions to start the baseball video game.

When receiving instructions to generate the distribution content item V from the user U, the controller 31 of the editing system 30 (the material data acquisition section 311) transmits the material request M1 via the communication device 33 to the control system 40 (Sc41). For each effect material X1 within the distribution content item V, a material request M1 is transmitted to the control system 40. The material request M1 on each effect material X1 includes (i) identification information Uid of the user U, and (ii) address information L1, which is entered by the user U for the effect material X1 in the second preparation processing.

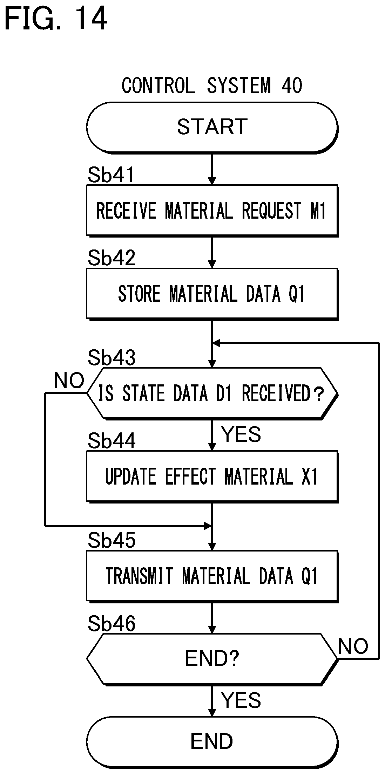

As illustrated in FIG. 14, the controller 41 of the control system 40 (the material data transmission section 414) receives the material request M1 from the editing system 30 via the communication device 43 (Sb41). The controller 41 (the material data transmission section 414) stores material data Q1 on the effect material X1 at an address within the storage device 42 (Sb42). The address is indicated by the address information L1 on the material request M1. As described with reference to FIG. 7, when no effect impartation conditions C1 are met, the material data Q1 representing the transparent image X11 is stored in the storage device 42.

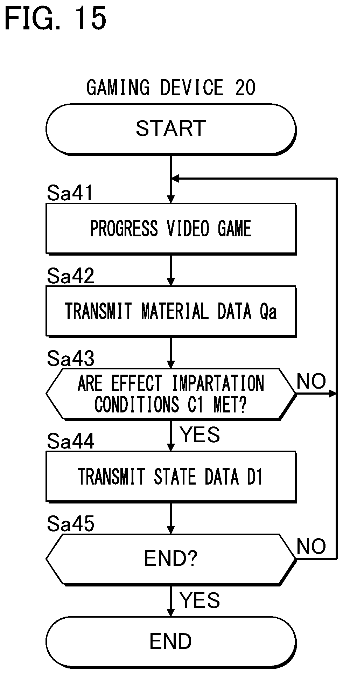

In contrast, as illustrated in FIG. 15, when receiving instructions to start the baseball video game from the user U, the controller 21 (the game control section 211 and the playback control section 212) of the gaming device 20 progresses the baseball video game in accordance with instructions from the user U on the input operation device 25 (Sa41). The controller 21 (the playback control section 212) transmits via the communication device 23 to the editing system 30, the material data Qa on the play material Xa that depends on the state of the baseball video game (Sa42).

As a result of the progress of the baseball video game, the condition determination section 214 determines whether one or more of the effect impartation conditions C1 indicated by the setting data S1 is met (Sa43). When no effect impartation conditions C1 are met (Sa43: NO), the controller 21 advances the step Sa41. The baseball video game is continued to progress. In contrast, when the effect impartation conditions C1 are met (Sa43: YES), the controller 21 (the condition determination section 214) transmits via the communication device 23 to the control system 40, state data D1 representing the effect impartation conditions C1 (Sa44).

The controller 21 determines whether a predetermined termination condition is met (Sa45). For example, when the termination instruction is entered to the input operation device 25 by the user U, it is determined that the termination condition is met. When the termination condition is not met (Sa45: NO), the controller 21 advances the processing to Step Sa42. In contrast, when the termination condition is met (Sa44: YES), the controller 21 terminates the baseball video game. Thus, pieces of state data D1, which indicate the effect impartation conditions C1 that are met during the progressing of the baseball video game, are sequentially transmitted to the control system 40 in conjunction with the progress of the baseball video game. The state data D1 includes identification information Uid of the user U.

As illustrated in FIG. 14, the controller 41 of the control system 40 (the material data control section 413) determines whether the communication device 43 has received the state data D1 from the gaming device 20 (Sb43). When the state data D1 is received by the communication device 43 (Sb43: YES), the controller 41 (the material data control section 413) updates the material data Q1 on the effect material X1 (Sb44). Specifically, from the reference data R1 associated with the identification information Uid included in the state data D1, the controller 41 (the material data control section 413) identifies unit data Z1 including the effect impartation conditions C1 indicated by the state data D1. Then, the material data Q1 to be updated is stored at an address indicated by the address information L1 associated with the unit data Z1. The controller 41 (the material data control section 413) updates the material data Q1, based on the control mode P1 included in the unit data Z1. As illustrated in FIG. 7, the material data Q1 is updated such that the transparent image X11 of the effect material X1 is switched to the display element X12. In contrast, when the state data D1 is not received by the communication device 43 (Sb43: NO), the material data Q1 is not updated (Sb44).

Thus, the material data control section 413 according to the first embodiment receives state data D1 representing a result of determination of whether the effect impartation conditions C1 are met. The material data control section 413 then updates the material data Q1 based on a result of the determination indicated by the state data D1. That is, when the effect impartation conditions C1 are met in the baseball video game, the material data Q1 on the effect material X1 associated with the effect impartation condition C1 is updated.

The controller 41 (the material data transmission section 414) transmits the material data Q1 via the communication device 43 to the editing system 30 (Sb45). As will be apparent from the description, when no effect impartation conditions C1 are met, the material data Q1 representing the transparent image X11 is transmitted to the editing system 30. When the effect impartation conditions C1 are met, the material data Q1 representing the display element X12 is transmitted to the editing system 30.

The controller 41 determines whether a predetermined termination condition is met (Sb46). For example, when a notification of termination of the baseball video game is received from the gaming device 20, it is determined that the termination condition is met. When the termination condition is not met (Sb46: NO), the controller 41 advances the processing to Step Sb43. The following (i) and (ii) are repeated: (i) updating of the material data Q1 when the effect impartation conditions C1 are met (Sb43 to Sb44); and (ii) transmission of the material data Q1 (Sb45). In contrast, when the termination condition is met (Sb46: YES), the controller 41 terminates the processing.

As illustrated in FIG. 13, after transmitting the material request M1 (Sc41), the controller 31 (the material data acquisition section 311) of the editing system 30 receives the material data Qa on the play material Xa via the communication device 33 (Sc42). Here, the received material data Qa has been transmitted from the gaming device 20 (Sa42). The controller 31 (the material data acquisition section 311) acquires material data Qb on the recording material Xb generated by the recording device 36 (Sc43). Furthermore, the controller 31 (the material data acquisition section 311) receives the material data Q1 on the effect material X1 via the communication device 33 (Sc44). Here, the received material data Q1 has been transmitted from the control system 40 (Sb45). The order of reception of the pieces of material data Q (Qa, Qb and Q1) is not limited to such examples.

The controller 31 (the edit processing section 312) generates a distribution content item V including materials X (Xa, Xb, and X1) obtained by the foregoing procedures (Sc45). As illustrated in FIG. 2, the distribution content item V is generated, in which the distribution content item V includes a play material Xa, a recording material Xb, and an effect material X1. The controller 31 (the edit processing section 312) transmits the distribution content item V via the communication device 33 to the distribution system 50 (Sc46). The distribution content item V is uploaded to the distribution system 50 from the editing system 30 and is transmitted from the distribution system 50 to each terminal apparatus 10.

The controller 31 determines whether the predetermined termination condition is met (Sc47). For example, when a termination instruction is entered to the input operation device 35 by the user U, it is determined that the termination condition is met. When the termination condition is not met (Sc47: NO), the controller 31 advances the processing to Step Sc42. The following (i) to (iii) are repeated: (i) acquisition of materials X (Xa, Xb, and X1) (Sc42 to Sc44); (ii) generation of a distribution content item V using the materials X (Sc45); and (iii) transmission of the distribution content item V (Sc46). In contrast, when the termination condition is met (Sc47: YES), the controller 31 terminates the processing. In the foregoing description, an example is given in which the controller 31 repeats reception of the material data Q1 (Sc44) after transmitting the material request M1 first (Sc41). However, it is envisaged that the controller 31 repeats transmission of the material request M1 (Sc41) and reception of the material data Q1 (Sc44) until the termination condition is met. That is, when the termination condition is not met (Sc47: NO), the controller 31 may advance the processing to Step Sc41.

As described above, in the first embodiment, the material data Q1 is transmitted from the control system 40 to the editing system 30. The material data Q1 is updated under the control conditions Y1 (specifically, the effect impartation conditions C1) that depend on instructions from the user U. As a result, it is possible to generate a variety of distribution content items V including an effect material X1 reflecting the intention or preference of the user U. In addition, simple processing, that is, setting the address information L to the distribution content item V, enables the effect material X1 used for the distribution content item V to be updated in conjunction with the progress of the baseball video game played by the user U. Specifically, the first and second preparation processing are executed prior to a start of the baseball video game. As a result, even if there is no instruction from the user U about the distribution content item V, the effect material X1 within the distribution content item V is updated at an appropriate time point during the progress of the baseball video game. The user U can concentrate on playing the baseball video games without dealing with generation of the distribution content item V.

### Second Embodiment

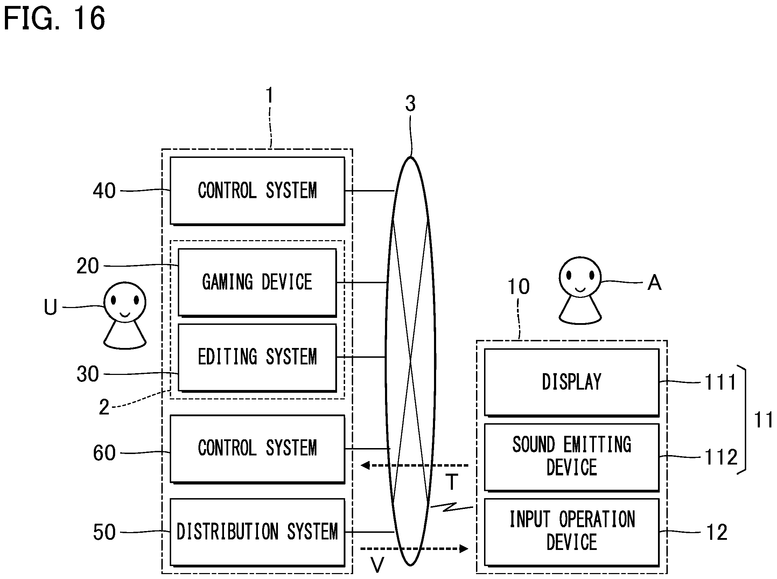

FIG. 16 is a block diagram illustrating a configuration of an information system 1 according to the second embodiment. The viewer A according to the second embodiment can support a user U at any time during distribution of a distribution content item V to the terminal apparatus 10. A supporting activity for the user U refers to an activity including provision of value media (so-called social tipping) to the user U. For example, the value media are currency (electronic money) or points, and they are available for a variety of services, such as e-commerce.

The viewer A determines a support amount W, which is a quantity of value media to be provided to the user U. The viewer A then operates the input operation device 12, to provide the terminal apparatus 10 with instructions to support the user U. The terminal apparatus 10 transmits a supporting activity instruction T that depends on an input operation of the viewer A on the input operation device 12. The supporting activity instruction T is data representing support for the user U by the viewer A, and includes the support amount W indicated by the viewer A.

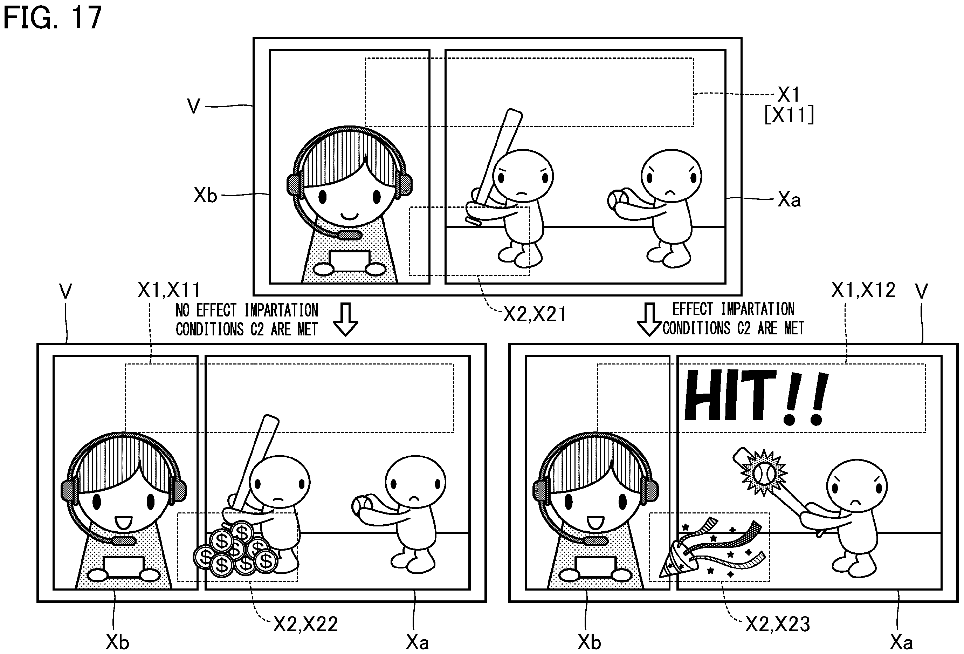

FIG. 17 is a schematic diagram illustrating a distribution content item V according to the second embodiment. As illustrated in FIG. 17, the distribution content item V according to the second embodiment includes an effect material X2 in addition to the same elements (Xa, Xb, and X1) according to the first embodiment. The effect material X2 is an image for rendering that represents a supporting activity for the user U by the viewer A. The effect material X2 is shown over both a play material Xa and a recording material Xb. At least one effect material X2 is arranged in the distribution content item V.

The effect material X2 is controlled based on the game state of the baseball video game as well as the effect material X1 according to the first embodiment. Furthermore, the effect material X2 according to the second embodiment is controlled based on the supporting activity instruction T from the viewer A. The effect material X2 follows the state of the baseball video game and the supporting activity instruction T from the viewer A. Specifically, the effect material X2 changes based on the following (i) and (ii): (i) whether effect impartation conditions C2, which relate to a state of the video baseball game, are met; and (ii) whether the supporting activity instruction T is provided. For example, when no effect impartation conditions C2 are met, the effect material X2 representing currencies, such as coins, is shown in response to the supporting activity instruction T. In contrast, when the effect impartation conditions C2 are met, the effect material X2 representing an object for rendering, such as a party popper, is shown in response to the supporting activity instruction T.

As illustrated in FIG. 16, the information system 1 according to the second embodiment includes a control system 60 in addition to the same elements according to the first embodiment (the recording system 2, the control system 40, and the distribution system 50). The control system 60 receives a supporting activity instruction T from the terminal apparatus 10. The control system 60 controls the effect material X2 within the distribution content item V based on the state of the baseball video game and the supporting activity instruction T from the terminal apparatus 10.

The gaming device 20 according to the second embodiment stores setting data S2 in addition to the setting data S1 shown in the first embodiment. The setting data S2 represents control conditions Y2 relating to control of the effect material X2. The control conditions Y2 as well as the control conditions Y1 are set in accordance with instructions from the user U on the input operation device 25. The control conditions Y2 are set for each user U.

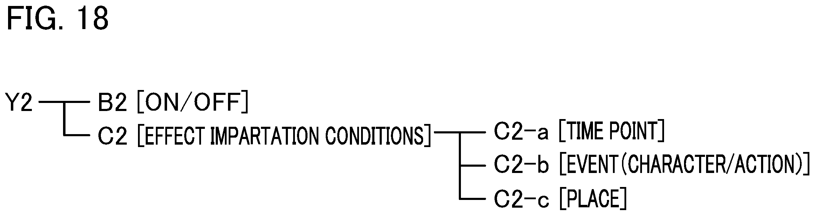

FIG. 18 is an explanatory diagram of the control conditions Y2. As illustrated in FIG. 18, the control conditions Y2 according to the second embodiment include a basic condition B2, and effect impartation conditions C2 (C2-a, C2-b, C2-c, ...) as well as the control conditions Y1 according to the first embodiment. The setting data S2 indicates the basic condition B2 and the effect impartation conditions C2, and it is stored in the storage device 22 of the gaming device 20. That is, the setting data S2 includes data indicating the basic condition B2, and data indicating the effect impartation conditions C2.

The basic condition B2 relates to whether to control the effect material X2 and is set to an active state (ON) or an inactive state (OFF). When the basic condition B2 is an active state, the effect material X2 is shown in the distribution content item V. When the basic condition B2 is an inactive state, the effect material X2 is not shown therein. Thus, according to the second embodiment, the user U can freely select to show or update the effect material X2. Thus, according to the first embodiment, the user U can freely select to show or update the effect material X2.

The effect impartation conditions C2 are to control the effect material X2 within the distribution content item V (e.g., shown, or updated), when the basic condition B2 is an active state. Specifically, the effect impartation conditions C2 to be set relate to the progress of the baseball video game. Whether the effect impartation conditions C2 are met changes over time based on the state of the baseball video game. When one or more specific effect impartation conditions C2 are met during the progress of the baseball video game, the effect material X2 within the distribution content item V is controlled (e.g., is shown, or is updated). According to such a configuration, it is possible to include the appropriate effect material X2 in the distribution content item V based on the state of the baseball video game.

The effect impartation conditions C2 include a condition C2-a relating to a time point in the baseball video game. When a specific time point arrives in the baseball video game, it is determined that the effect impartation condition C2-a is met. Examples of the effect impartation condition C2-a include a time point at which a specific inning is started in the baseball video game, and a time point at which a specific situation occurs in the baseball video game. Examples of the specific inning indicated as the effect impartation condition C2-a include a last inning of a game (ninth inning). Examples of the specific situation indicated as the effect impartation condition C2-a include a situation in which the team of the user U will be switched with the team of the opponent; a situation in which the team of the opponent will be switched with the team of the user U; a situation of bases full; and other critical situations that directly affect an outcome of the baseball video game. According to this configuration, the effect material X2 provides effective rendering of arrival of a specific time point in the baseball video game, and thereby a distribution content item V reflecting such a rendering can be generated.

The effect impartation conditions C2 further include a condition C2-b relating to an event that will occur in the baseball video game. When a specific event occurs in the baseball video game, it is determined that the effect impartation condition C2-b is met. Examples of the event indicated as the effect impartation condition C2-b include an event relating to a specific player character in the baseball video game, and an event relating to a specific action by any player character. Examples of the event relating to the specific player character include an event in which a specific player character that belongs to the team of the user U will appear; an event in which a specific player character that belongs to the team of the opponent will appear; and an event in which any player character that belongs to the team of user U will appear. Examples of the event relating to the specific action include an action by which a batter achieves a home run; an action by which a pitcher gets a strikeout; and an action by which a runner steals a base. Although description is given in which the effect impartation condition C2-b relating to an event is independent from the effect impartation condition C2-b, a set of both may be an effect impartation condition C2-b. For example, an occurrence of an event in which a specific player character will achieve a home run is set as an effect impartation condition C2-b. According to this configuration, the effect material X2 provides the effective rendering of an occurrence of a specific event in the baseball video game, and thereby a distribution content item V reflecting such a rendering can be generated.

The effect impartation conditions C2 further include a condition C2-c relating to a virtual location at which a game is held in the baseball video game. When a game in the baseball video game is held in a specific stadium, it is determined that the effect impartation condition C2-c is met. According to this configuration, an effective rendering of a specific location in the baseball video game is implemented by the effect material X2.

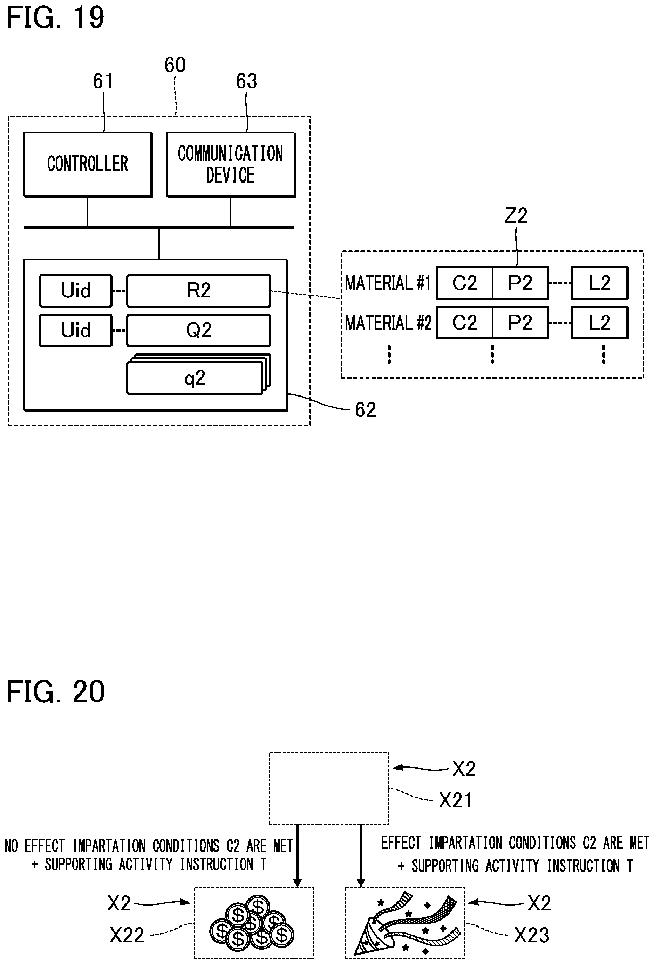

FIG. 19 is a block diagram illustrating a configuration of the control system 60. As illustrated in FIG. 19, the control system 60 is a computer system including a controller 61, a storage device 62, and a communication device 63. The control system 60 may be a single device, or it may be more than one device separated from each other.

The controller 61 comprises one or more processors that control each element of the control system 60. Specifically, the controller 61 comprises one or more processors, such as CPUs, GPUs, DSPs, FPGAs, or ASICs. The communication device 63 communicates with the gaming device 20 and the editing system 30 via the network 3.

The storage device 62 comprises one or more memories that store a program executed by the controller 61, and a variety of types of data used by the controller 61. A known recording medium, such as a semiconductor recording medium and a magnetic recording medium, or a combination of a plurality of recording media, is used as a storage device 62. A portable recording medium that is detachable from the control system 60 may be used as the storage device 62. Alternatively, a recording medium (e.g., a cloud storage) that is writable or readable by the controller 61 via the network 3 may be used as the storage device 62.

As illustrated in FIG. 19, the storage device 62 stores reference data R2, material data Q2, and pieces of basic data q2. For each user U, the reference data R2 and the material data Q2 are stored. Specifically, the reference data R2 and the material data Q2 are associated with an identification information Uid of the user U and are stored in the storage device 62.

In the following description, an example is given for convenience in which the user U is identified by both the control systems 40 and 60, using the same identification information Uid. However, it is envisaged that for identifying the user U, the identification information Uid used by the control system 40 differs from the identification information Uid' used by the control system 60. For example, the identification information Uid', which is entered by the user U to set the control condition Y2, is transmitted from the gaming device 20 to the control system 60. The identification information Uid' then is stored in the storage device 62. In this description, an example is given in which the identification information Uid' is entered by the user U. However, information for identifying the identification information Uid' may be entered by the user U into the gaming device 20. The controller 61 of the control system 60 may then identify the identification information Uid' with the information, to store the identification information Uid'.

The material data Q2 represents an effect material X2, which is used for the distribution content item V of the user U. Specifically, examples of the material data Q2 include image data representing an image of the effect material X2.

FIG. 20 is an explanatory diagram of an effect material X2 indicated by the material data Q2. The effect material X2 is a video including a transparent image X21, a display element X22, and a display element X23. The transparent image X21 as well as the transparent image X11 is transparent to an image thereunder, and therefore the image is seen through. The display elements X22 and X23 each are an image for rendering that is viewable by the viewer A.

As described above, the material data Q2 is updated in response to the supporting activity instruction T from the viewer A. Specifically, as illustrated in FIG. 20, when there is no occurrence of a supporting activity instruction T, the effect material X2 includes a transparent image X21, regardless of whether the effect impartation conditions C2 are met. The effect material X1 cannot be seen by the viewer A. In contrast, when there is an occurrence of a supporting activity instruction T, the effect material X2 includes the display element X22 or X23. The effect material X2 cannot be seen by the viewer A.

Specifically, when there is an occurrence of the supporting activity instruction T when no effect impartation conditions C2 are met, the effect material X2 is generated by synthesizing the display element X22 in the transparent image X21. Further, when there is an occurrence of the supporting activity instruction T when the effect impartation conditions C2 are met, the effect material X2 is generated by synthesizing the display element X23 in the transparent image X21. Based on whether or not the effect impartation conditions C2 are met, this depends on which of the display element X22 or X23 is shown in response to the supporting activity instruction T.

When a predetermined delete condition is met after the effect impartation conditions C2 are met, the display element X22 or X23 is deleted. The effect material X2 transitions to a transparent state in which the effect material X2 includes the transparent image X21. The delete condition is that a predetermined period elapses from display of the display element X22 or X23. Thus, in the second embodiment, the effect material X2 is generated by synthesizing the display element X22 in the transparent image X21. As a result, it is not required to determine whether the effect material X2 (display element X22) is acquired by the editing system 30.

The pieces of basic data q2 shown in FIG. 19 represent images used to generate the material data Q2 for the user U. For example, pieces of basic data q2 include basic data q2 representing the transparent image X21, basic data q2 representing the display element X22, and basic data q2 representing the display element X23. The pieces of basic data q2 are stored in the storage device 62.

The reference data R2 includes pieces of unit data Z2, each corresponding to an effect material X2 used for the distribution content item V of the user U. Each of the pieces of unit data Z2 indicates a set of effect impartation conditions C2 and a control mode P2. The control mode P2 refers to how the effect material X2 is updated (a scenario of how the effect material X2 is updated). In an example of FIG. 20, a control mode P2 indicates a set of a transparent image X21, a display element X22, and a display element X23. Thus, the reference data R2 indicates a set of effect impartation conditions C2 and a control mode P2, both of which are set in accordance with instructions from the user U on the gaming device 20. The material data Q2 is updated by the control mode P2 included in the reference data R2 when there is an occurrence of the supporting activity instruction T from the user U.

As illustrated in FIG. 19, address information L2 is associated with each piece of unit data Z2 included in the reference data R2 and is stored. That is, the address information L2 is stored for each effect material X2 used for the distribution content items V of the user U. The address information L2 is data representing an address of the material data Q2 in the storage device 62. Specifically, the address information L2 to be used is a URL of the material data Q2. The address information L2 is supplied to the user U by the control system 60. The editing system 30 receives from the control system 60, the material data Q2 stored at an address indicated by the address information L2. As will be apparent from the description, the address information L2 is data for acquiring the material data Q2 by the editing system 30 from the control system 60 (data for identifying the material data Q2).

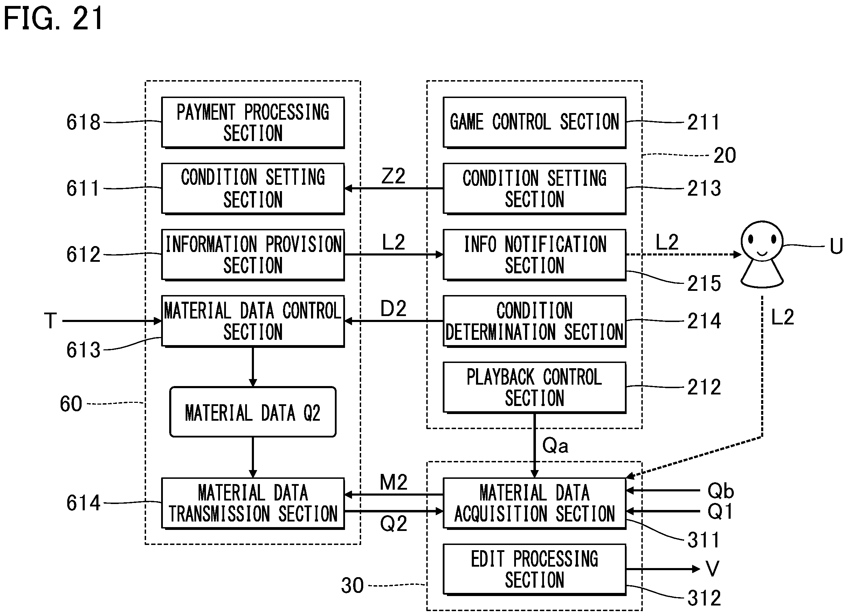

FIG. 21 is a block diagram illustrating a functional configuration of the information system 1. The functional configuration of the control system 40 is the same as that in the first embodiment, and therefore an illustration thereof is omitted in FIG. 21. The gaming device 20 includes a game control section 211 and a playback control section 212, which are the same as those in the first embodiment.

A condition setting section 213 according to the second embodiment sets the following (i) and (ii) in accordance with instructions from the user U on the input operation device 25: (i) control conditions Y1 (the basic condition B1 and effect impartation conditions C1); and (ii) control conditions Y2 (the basic condition B2 and effect impartation conditions C1). In a manner similar to that in the first embodiment, the condition setting section 213 sets unit data Z1, which indicates the effect impartation conditions C1 and the control mode P1, in accordance with instructions from the user U. The condition setting section 213 then transmits the unit data Z1 to the control system 40. Furthermore, the condition setting section 213 according to the second embodiment sets the effect impartation conditions C2 and the control mode P2 in accordance with instructions from the user U. The condition setting section 213 then transmits to the control system 60, the unit data Z2 representing a set of the effect impartation conditions C2 and the control mode P2.

The condition determination section 214 determines whether the control conditions Y1 (the effect impartation conditions C1) and the control conditions Y2 (the effect impartation conditions C2) are met. The determination by the condition determination section 214 is executed in conjunction with the progress of the baseball video game. That is, from time to time, the condition determination section 214 determines whether the control conditions Y1 and the control conditions Y2 are met during the progress of the baseball video game. The condition determination section 214 according to the second embodiment generates the following (i) and (ii): state data D1 representing the result of determination of whether the control conditions Y1 are met; and (ii) state data D2 representing the result of determination of whether the control conditions Y2 are met. Specifically, in a manner similar to the first embodiment, the state data D1 indicates the effect impartation conditions C1 that have been met in the baseball video game. The state data D2 indicates the effect impartation conditions C2 that have been met in the baseball video game. The state data D1 is transmitted from the communication device 23 to the control system 40. The state data D2 is transmitted from the communication device 23 to the control system 60.

As illustrated in FIG. 21, the controller 61 of the control system 60 executes a program stored in the storage device 62 to implement functions (a condition setting section 611, an information provision section 612, a material data control section 613, a material data transmission section 614, and a payment processing section 618).

The payment processing section 618 executes payment processing when receiving a supporting activity instruction T from the terminal apparatus 10. The payment processing is an electronic payment by which currencies equivalent to the support amount W indicated by the supporting activity instruction T is paid to the user U from the viewer A. By referring to an account of the viewer A in which the balance of points is registered, the payment processing section 618 may execute the payment processing by which points equivalent to the support amount W are transferred from the account of the viewer A to that of the user U.

It is envisaged that the viewer A will purchase points or game items through the payment processing prior to distribution of a distribution content item V. In this example, the payment processing section 618 may consume the purchased points or game items of the viewer A, when receiving a supporting activity instruction T from the terminal apparatus 10. The payment processing may be executed at a different timing from an occurrence of the supporting activity instruction T. Furthermore, the payment processing is not required necessarily for acceptance of the supporting activity instruction T from the terminal apparatus 10. The points or game items that have been already acquired by the viewer A in some way may be consumed in response to the occurrence of the supporting activity instruction T.

The condition setting section 611 generates reference data R2 defining a relationship between the control conditions Y2 (the effect impartation conditions C2) and the control mode P2. Specifically, for each effect material X2, the condition setting section 611 adds to the reference data R2, a piece of unit data Z2 received from the gaming device 20. The information provision section 612 provides the user U with the address information L2 for each effect material X2.

The material data control section 613 controls the effect material X2 indicated by the material data Q2. Specifically, the material data control section 613 updates the effect material X2 based on the supporting activity instruction T transmitted from the terminal apparatus 10 and the state data D2 transmitted from the gaming device 20. As described above, the state data D2 represents whether the effect impartation conditions C2 are met. In response to the supporting activity instruction T from the terminal apparatus 10, the material data control section 613 updates the effect material X1 used for the distribution content item V of the user U under the control conditions Y2 (the effect impartation conditions C2) set by the user U.

The material data transmission section 614 transmits the material data Q2 indicated by the address information L2 to the requesting editing system 30 based on the material request M2 that uses the address information L2 from the editing system 30. The following (i) and (ii) are executed in conjunction with the progress of the baseball video game: (i) control of the effect material X2 by the material data control section 413; and (ii) transmission of the material data Q2 by the material data transmission section 614.

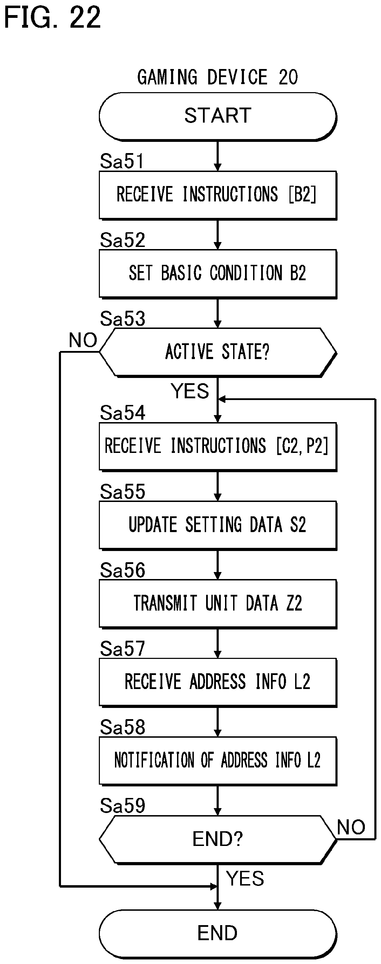

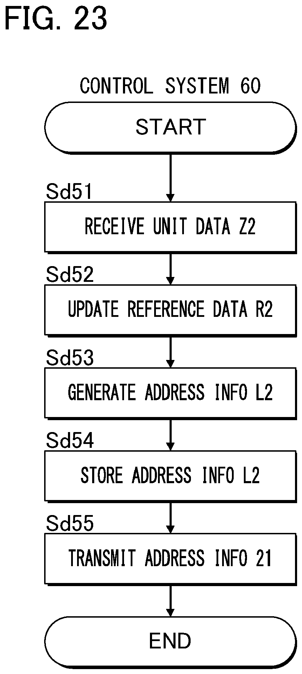

Procedures executed by the information system 1 will be described. Procedures for the initial settings immediately after the start of a baseball video game are as described with reference to FIG. 9. In the first preparation processing after the initial settings, procedures shown in FIGS. 22 and 23 in addition to procedures shown in FIGS. 10 and 11 are executed. The processing shown in FIGS. 22 and 23 includes a setting of control conditions Y2 and an issue of address information L2.

By operating the input operation device 25, the user U provides the gaming device 20 with instructions on whether an effect material X2 (the basic condition B2) is to be used for a user's distribution content item V. The controller 21 (the condition setting section 213) of the gaming device 20 receives the instructions on the basic condition B2 from the user U (Sa51). The controller 21 (the condition setting section 213) sets the basic condition B2 indicated by the setting data S2 to a state indicated by the user U (an active state or an inactive state) (Sa52). The controller 21 (the condition setting section 213) determines whether the basic condition B2 is set to an active state (Sa53). When the basic condition B2 is set to the inactive state (Sa53: NO), the controller 21 terminates the first preparation processing without the following procedures.

The user U, who has indicated the active state as the basic condition B2, operates the input operation device 25 to indicate a set of effect impartation conditions C2 and a control mode P2 for each effect material X2 that is used for the user's distribution content item V. For example, as the effect impartation conditions C2, one or more of the prepared options may be selected by the user U. In addition, as the control mode P2, any of the prepared options may be selected by the user U. The controller 21 (condition setting section 213) receives instructions from the user U relating to the setting of the effect impartation condition C2 and the control mode P2 (Sa54). The controller 21 (the condition setting section 213) sets the effect impartation conditions C2 indicated by the setting data S2 to the conditions indicated by the user U (Sa55). The controller 21 (the condition setting section 213) transmits via the communication device 23 to the control system 60, unit data Z2 representing the set of the effect impartation conditions C2 and the control mode P2 both indicated by the user U (Sa56). The identification information Uid of the user U is added to the unit data Z2.

As illustrated in FIG. 23, the controller 61 (the condition setting section 611) of the control system 60 receives the unit data Z2 from the gaming device 20 via the communication device 63 (Sd51). The controller 61 (the condition setting section 611) searches the storage device 62 for reference data R2 associated with the identification information Uid, which is added to the unit data Z2. The controller 61 then adds the unit data Z2 to the reference data R2 (Sd52). For one effect material X2, the relationship between the effect impartation conditions C2 and the control mode P2 both indicated by the user U is registered in the reference data R2.

The controller 61 (the information provision section 612) generates address information L2 relating to the material data Q2 on the effect material X2 of the present registration (Sd53). The address information L2 representing an address of the stored material data Q2 is generated. The controller 61 (the information provision section 612) stores the address information L2 associated with the unit data Z2 (Sd54). The unit data Z2 corresponds to the effect material X2 and is included in the reference data R2. The controller 21 (the information provision section 612) transmits the address information L2 via the communication device 63 to the gaming device 20 (Sd55). The address information L2 representing the address of the material data Q2 on the effect material X2 is provided to the user U who has indicated the effect material X2.

As illustrated in FIG. 22, the controller 21 (the information notification section 215) of the gaming device 20 receives the address information L2 from the control system 60 via the communication device 23 (Sa57). The controller 21 (the information notification section 215) notifies the user U of the address information L2 (Sa58). Specifically, the address information L2 is shown on the display 241.

The controller 21 determines whether a predetermined termination condition is met (Sa59). For example, when a termination instruction is entered to the input operation device 25 by the user U, it is determined that the termination condition is met. When the termination condition is not met (Sa59: NO), the controller 21 advances the processing to Step Sa54. For each time the set of the effect impartation conditions C2 and the control mode P2 is indicated by the user U for one effect material X2, the following (i) to (iii) are executed: (i) updating of the setting data S2 (Sa54 and Sa55); (ii) updating of the reference data R2 (Sa56, Sd51 and Sd52); and (iii) provision of the address information L2 (Sd53 to Sd55, Sa57 and Sa58).

In contrast, when the termination condition is met (Sa59: YES), the controller 21 terminates the processing. As will be apparent from the description, the association of the effect impartation conditions C2 indicated by the user U with the effect material X2 is registered, and notification of the address information L2 associated with each effect material X2 is received by the user U.

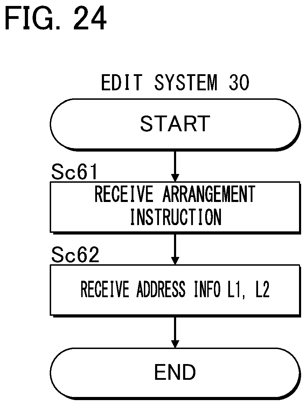

FIG. 24 is a flowchart illustrating procedures for second preparation processing according to the second embodiment. Procedures shown in FIG. 12 are replaced to procedures shown in FIG. 24. When the second preparation processing is started, the user U knows the address information L1 for each effect material X1 and the address information L2 for each effect material X2.

By operating the input operation device 35, the user U indicates arrangement of the effect materials X1 and X2 within the distribution content item V. The controller 31 (the edit processing section 312) of the editing system 30 receives from the user U, instructions on arrangement of the effect material X1 or X2 (Sc61). The instructions from the user U include indicating a position of the effect material X1 or X2 within the distribution content item V.

The user U operates the input operation device 35 to input into the editing system 30, the address information L1 on the effect material X1 and the address information L2 on the effect material X2. The controller 31 (the material data acquisition section 311) receives an input of the address information L1 and the address information L2 from the user U (Sc62). The address information L1 or L2 is stored in the storage device 32. The following (i) and (ii) are executed for each effect materials X (X1 and X2) arranged in the distribution content item V: (i) reception of instructions on the effect material X1 or X2 (Sc61); and (ii) reception of the address information L1 or L2 (Sc62).

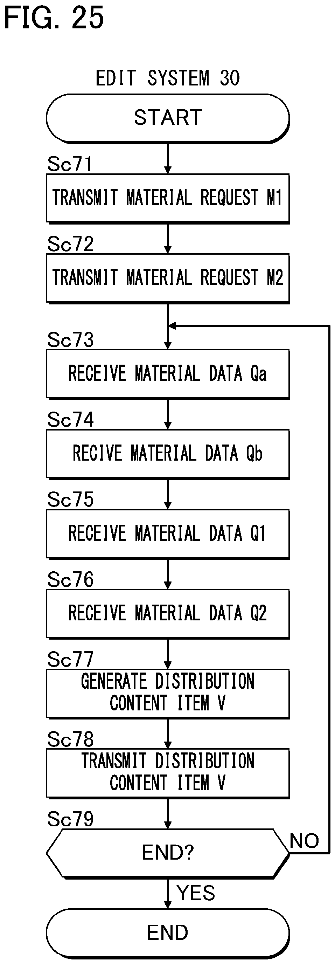

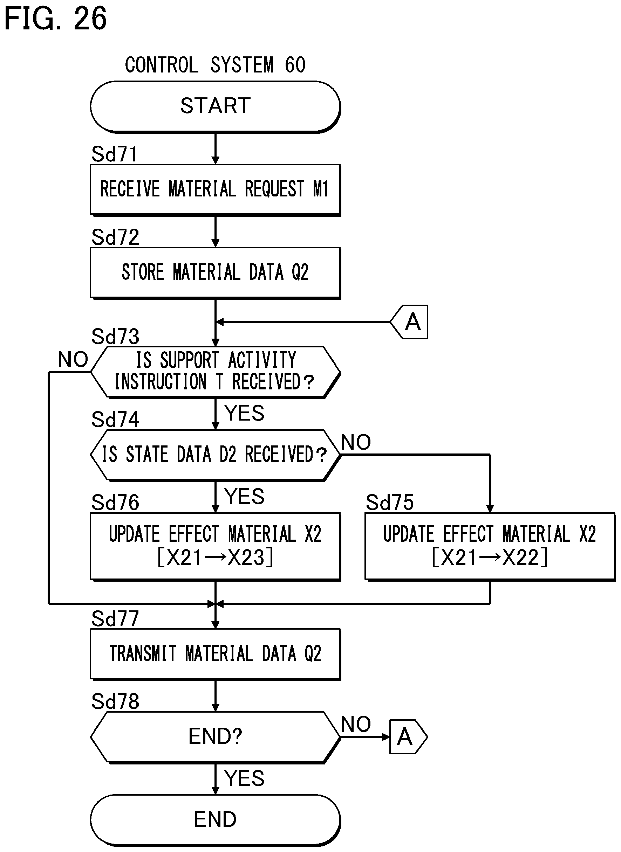

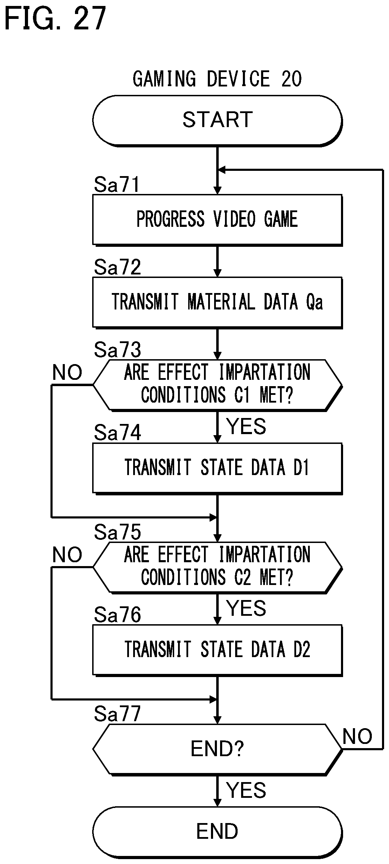

FIGS. 25 to 27 are each a flow chart illustrating edit processing for generating a distribution content item V. The editing system 30 according to the second embodiment executes procedures shown in FIG. 25 instead of the procedures shown in FIG. 13 according to the first embodiment. FIG. 26 is a flowchart illustrating procedures executed by the control system 60 in the edit processing. The control system 40 executes the procedures shown in FIG. 14 in a manner similar to those in the first embodiment. The gaming device 20 according to the second embodiment executes the procedures shown in FIG. 27 instead of the procedures shown in FIG. 15 according to the first embodiment.

When receiving instructions to generate the distribution content item V from the user U, the controller 31 of the editing system 30 (the material data acquisition section 311) transmits the material request M1 via the communication device 33 to the control system 40 (Sc71). For each effect material X1 of the distribution contents V, a material request M1 is transmitted to the control system 40. The material request M1 on each effect material X1 includes (i) identification information Uid of the user U, and (ii) address information L1, which is entered by the user U for the effect material X1 in the second preparation processing.

The controller 31 (the material data acquisition section 311) transmits the material request M2 via the communication device 33 to the control system 60 (Sc72). For each effect material X2 on the distribution content item V, a material request M2 is transmitted to the control system 60. The material request M2 on each effect material X2 includes (i) identification information Uid of the user U, and (ii) address information L2, which is entered by the user U for the effect material X2 in the second preparation processing.

As illustrated in FIG. 26, the controller 61 of the control system 60 (the material data transmission section 614) receives the material request M2 from the editing system 30 via the communication device 63 (Sd71). The controller 61 (the material data transmission section 614) stores material data Q2 on the effect material X2 at an address within the storage device 62 (Sd72). The address is indicated by the address information L2 on the material request M2. As described with reference to FIG. 20, when there is no reception of the supporting activity instruction T, the material data Q2 representing the transparent image X21 is stored in the storage device 62.

In contrast, as illustrated in FIG. 27, the controller 21 (the game control section 211 and the playback control section 212) of the gaming device 20 progresses the baseball video game in accordance with instructions from the user U on the input operation device 25 (Sa71). The controller 21 (the playback control section 212) transmits via the communication device 23 to the editing system 30, the material data Qa on the play material Xa that depends on the state of the baseball video game (Sa72).

As a result of the progress of the baseball video game, the condition determination section 214 determines whether one or more of the effect impartation conditions C1 indicated by the setting data S1 is met (Sa73). When the effect impartation conditions C1 are met (Sa73: YES), the controller 21 (the condition determination section 214) transmits via the communication device 23 to the control system 40, state data D1 representing the effect impartation conditions C1 (Sa74). In contrast, when no effect impartation conditions C1 are met (Sa73: NO), the transmission of the state data D1 (Sa74) is not executed.

As a result of the progress of the baseball video game, the condition determination section 214 determines whether one or more of the effect impartation conditions C2 indicated by the setting data S2 is met (Sa75). When the effect impartation conditions C2 are met (Sa75: YES), the controller 21 (the condition determination section 214) transmits via the communication device 23 to the control system 60, state data D2 representing the effect impartation conditions C2 (Sa76). In contrast, when no effect impartation conditions C2 are met (Sa75: NO), the transmission of the state data D2 (Sa76) is not executed.

The controller 21 determines whether the predetermined termination condition is met (Sa77). For example, when a termination instruction is entered to the input operation device 25 by the user U, it is determined that the termination condition is met. When the termination condition is not met (Sa77: NO), the controller 21 advances the processing to Step Sa71. In contrast, when the termination condition is met (Sa77: YES), the controller 21 terminates the baseball video game. Thus, pieces of state data D1, which indicate the effect impartation conditions C1 that are met, are sequentially transmitted to the control system 40 in conjunction with the progress of the baseball video game. Furthermore, pieces of state data D2, which indicate the effect impartation conditions C2 that are met, are sequentially transmitted to the control system 60. The state data D1 and D2 each include identification information Uid of the user U.

As illustrated in FIG. 26, the controller 61 of the control system 60 (the material data control section 613) determines whether the communication device 63 has received the supporting activity instruction T from the terminal apparatus 10 (Sd73). When the supporting activity instruction T is received (Sd74), the controller 61 (the material data control section 613) determines whether the communication device 63 has received the state data D2 from the gaming device 20 (Sd74). When the supporting activity instruction T is received, but the state data D2 has not yet been received (Sd74: NO), the controller 61 (the material data control section 613) updates the material data Q2 on the effect material X2 (Sd75). Specifically, the material data Q2 is updated such that the effect material X2 includes a display element X22. In contrast, when both the supporting activity instruction T and the state data D2 (Sd74: YES) are received, the controller 61 (the material data control section 613) updates the material data Q2 on the effect material X2 (Sd76). Specifically, the material data Q2 is updated such that the effect material X2 includes a display element X23. In contrast, when the supporting activity instruction T has not yet been received by the communication device 63 (Sd73: NO), updating of the material data Q2 (Sd75 and Sd76) is not executed.

The controller 61 (the material data transmission section 614) transmits the material data Q2 via the communication device 63 to the editing system 30 (Sd77). As will be apparent from the description, in conjunction with the progress of the baseball video game, the material data control section 613 according to the second embodiment updates the material data Q2 on the effect material X2 based on the following (i) and (ii): (i) a supporting activity instruction T that depends on an input operation of the viewer A; and (ii) state data D2 representing the state of the baseball video game.

The controller 61 determines whether the predetermined termination condition is met (Sd78). For example, when a notification of termination of the baseball video game is received from the gaming device 20, it is determined that the termination condition is met. When the termination condition is not met (Sd78: NO), the controller 61 advances the processing to Step Sd73. The following (i) and (ii) are repeated: (i) updating of the material data Q2 in response to a reception of a supporting activity instruction T (Sd73 to Sd76); and (ii) transmission of the material data Q2 (Sd77). In contrast, when the termination condition is met (Sd78 YES), the controller 61 terminates the processing.

As illustrated in FIG. 25, after transmitting the material requests M1 and M2 (Sc72), the controller 31 (the material data acquisition section 311) of the editing system 30 receives the material data Qa on the play material Xa from the gaming device 20 via the communication device 33 (Sc73). Here, the received material data Qa has been transmitted from the gaming device 20 (Sa72). The controller 31 (the material data acquisition section 311) acquires material data Qb on the recording material Xb generated by the recording device 36 (Sc74). Furthermore, the controller 31 (the material data acquisition section 311) receives the material data Q1 on the effect material X1 via the communication device 33 (Sc75). Here, the received material data Q1 has been transmitted from the control system 40 (Sb45). The controller 31 (the material data acquisition section 311) receives the material data Q2 on the effect material X2 via the communication device 33 (Sc76). Here, the received material data Q2 has been transmitted from the control system 60 (Sd77). The order of reception of the pieces of material data Q (Qa, Qb, Q1, and Q2) is not limited to such examples.

The controller 31 (the edit processing section 312) generates a distribution content item V including the materials X (Xa, Xb, X1, and X2) acquired by the foregoing procedures (Sc77). As illustrated in FIG. 17, the distribution content item V is generated, in which the distribution content item V includes a play material Xa, a recording material Xb, and effect materials X1 and X2. The controller 31 (the edit processing section 312) transmits the distribution content item V via the communication device 33 to the distribution system 50 (Sc78). The distribution content item V is uploaded to the distribution system 50 from the editing system 30 and is transmitted from the distribution system 50 to each terminal apparatus 10.

The controller 31 determines whether the predetermined termination condition is met (Sc79). For example, when a termination instruction is entered to the input operation device 35 by the user U, it is determined that the termination condition is met. When the termination condition is not met (Sc79: NO), the controller 31 advances the processing to Step Sc73. The following (i) to (iii) are repeated: (i) acquisition of materials X (Xa, Xb, X1, and X2) (Sc73 to Sc76); (ii) generation of a distribution content item V using the materials X (Sc77); and (iii) transmission of the distribution content item V (Sc78). In contrast, when the termination condition is met (Sc79: YES), the controller 31 terminates the processing. As described in the first embodiment, it is envisaged that the controller 31 repeats transmission of the material request M1 (Sc71) and reception of the material data Q1 (Sc75) until the termination condition is met. Similarly, in the foregoing description, an example is given in which the controller 31 repeats reception of the material data Q2 (Sc76) after transmitting the material request M2 first (Sc72). However, it is envisaged that the controller 31 repeats transmission of the material request M2 (Sc72) and reception of the material data Q2 (Sc76) until the termination condition is met. That is, when the termination condition is not met (Sc79: NO), the controller 31 may advance the processing to Step Sc71.

As described above, in the second embodiment, the material data Q2 on the effect material X2 used for the distribution content item V is updated based on the supporting activity instruction T from the viewer A of the distribution content item V and the state of the baseball video game. Specifically, a mode of the effect material X2, which is shown on the distribution content item V based on the supporting activity instruction T, changes based on the state of the baseball video game. As a result, the rendering relating to the supporting activity instruction T from the viewer A is diversified in the distribution content item V. It is possible to provide the viewer A with a significant incentive to issue the supporting activity instruction T.

In the second embodiment, the material data Q2 is transmitted from the control system 60 to the editing system 30 and is updated under the control condition Y2 (specifically, the effect impartation condition C2) in accordance with instructions from the user U. As a result, it is possible to generate a variety of distribution content items V including an effect material X2 reflecting the intention or preference of the user U. In addition, simple processing, that is, setting the address information L2 to the distribution content item V, enables the effect material X2 used for the distribution content item V to be updated in conjunction with the progress of the baseball video game played by the user U. Specifically, the first and second preparation processing are executed prior to the start of a baseball video game. As a result, even if there are no instructions from the user U about the distribution content item V, the effect material X2 within the distribution content item V is updated at an appropriate time point during the progress of the baseball video game. The user U can concentrate on playing baseball video games without dealing with generation of distribution content item V.

### Third Embodiment

The controller 21 (e.g., the game control section 211) of the gaming device 20 according to the third embodiment transmits to the control systems 40 and 60, state data D representing a state of the baseball video game. The state data D indicates a state associated with effect impartation conditions C (C1 and C2). Specifically, Examples of the state indicated by the state data D include arrival of a specific time point in the baseball video game; an occurrence of a variety of events; a specific player character involved in the event; a specific action in the event; and a virtual location at which games are held in the baseball video game. As described above, in the first and second embodiments, the state data D (D1 and D2), which indicate a result of determination of whether the effect impartation conditions C are met, are transmitted from the gaming device 20 to the control systems 40 and 60. In contrast, in the third embodiment, the state data D representing the progress of the baseball video game is directly transmitted to the control systems 40 and 60. For this reason, in the third embodiment, the condition determination section 214 is omitted from the gaming device 20.

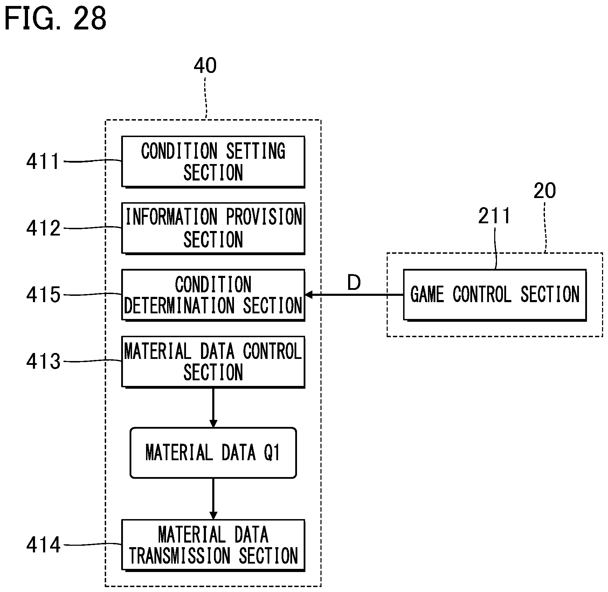

FIG. 28 is a block diagram illustrating a functional configuration of the control system 40 according to the third embodiment. As illustrated in FIG. 28, the controller 41 of the control system 40 according to the third embodiment acts as a condition determination section 415 in addition to the same elements as those of the first embodiment (the condition setting section 411, the information provision section 412, the material data control section 413, and the material data transmission section 414).

The condition determination section 415 determines whether effect impartation conditions C1 are met using the state data D received from the gaming device 20 via the communication device 43. That is, it is determined whether the effect impartation conditions C1 registered in the reference data R1 are met based on the state data D. The material data control section 413 according to the third embodiment updates material data Q1 based on a result of the determination by the condition determination section 415.

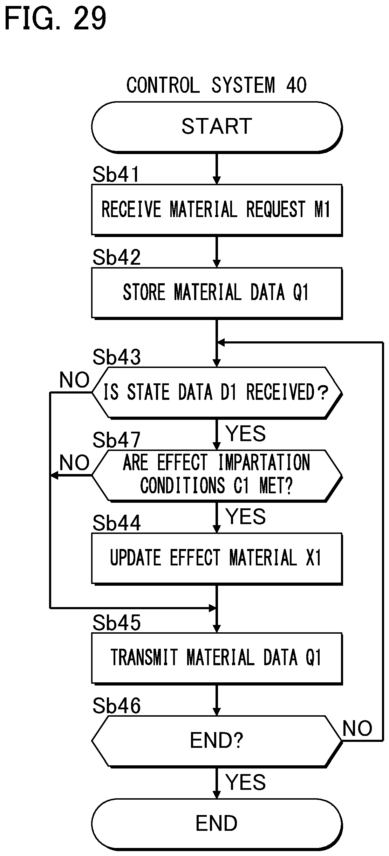

FIG. 29 is a flowchart of procedures executed by the controller 41 of the control system 40 in the edit processing. In the third embodiment, the procedures shown in FIG. 14 in the first embodiment are replaced with the procedures shown in FIG. 29.

Upon receiving a material request M1 (Sb41) and storing the material data Q1 (Sb42), the controller 41 (the condition determination section 415) of the control system 40 determines whether the state data D has been received from the gaming device 20 (Sb43). When the state data D is received (Sb43: YES), the controller 41 (the condition determination section 415) uses the state data D to determine whether any of the effect impartation conditions C1 registered in the reference data R1 is met (Sb47). When the effect impartation condition C1 is met (Sb47: YES), the controller 41 (the material data control section 413) updates the material data Q1 on the effect material X1 (Sb44). In contrast, when state data D has not yet been received (Sb43: NO), or when no effect impartation conditions C1 are met (Sb47: NO), updating of the material data Q1 (Sb44) is not executed. The transmission of the material data Q1 to the editing system 30 (Sb45) and other similar actions are the same as those in the first embodiment.

The third embodiment provides the same effects as those of the first embodiment. In the third embodiment, the condition determination section 415 of the control system 40 determines whether the effect impartation conditions C1 are met. As a result, compared with a configuration in which such a determination is executed by the gaming device 20, processing load on the gaming device 20 is reduced. In contrast, in the first embodiment, the gaming device 20 determines whether the effect impartation conditions C1 are met. As compared with a configuration in which such a determination is executed by the control system 40, processing load thereon is reduced.

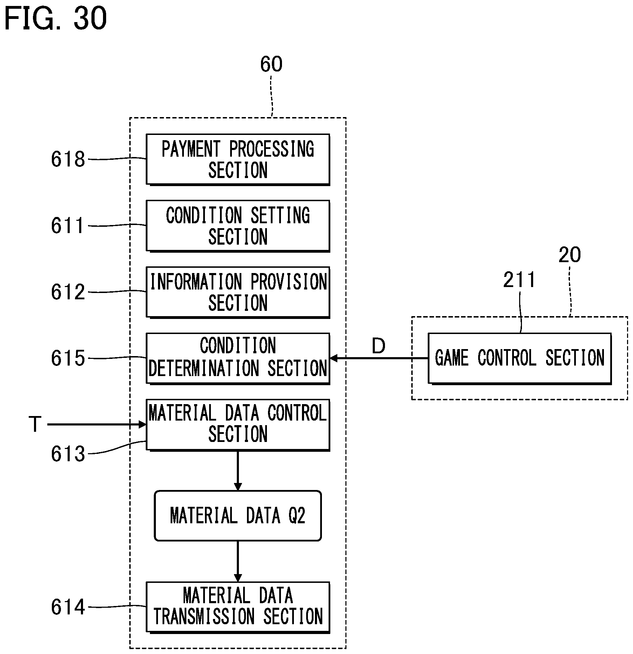

FIG. 30 is a block diagram illustrating a functional configuration of the control system 60 according to the third embodiment. As illustrated in FIG. 30, the controller 61 of the control system 60 according to the third embodiment acts as a condition determination section 615 in addition to the same elements as those of the first embodiment (the condition setting section 611, the information provision section 612, the material data control section 613, the material data transmission section 614, and the payment processing section 618).

The condition determination section 615 determines whether effect impartation conditions C2 are met using the state data D received from the gaming device 20 via the communication device 63. That is, it is determined whether the effect impartation conditions C2 registered in the reference data R2 are met based on the state data D. The material data control section 613 according to the third embodiment updates material data Q2 based on a result of the determination by the condition determination section 615.

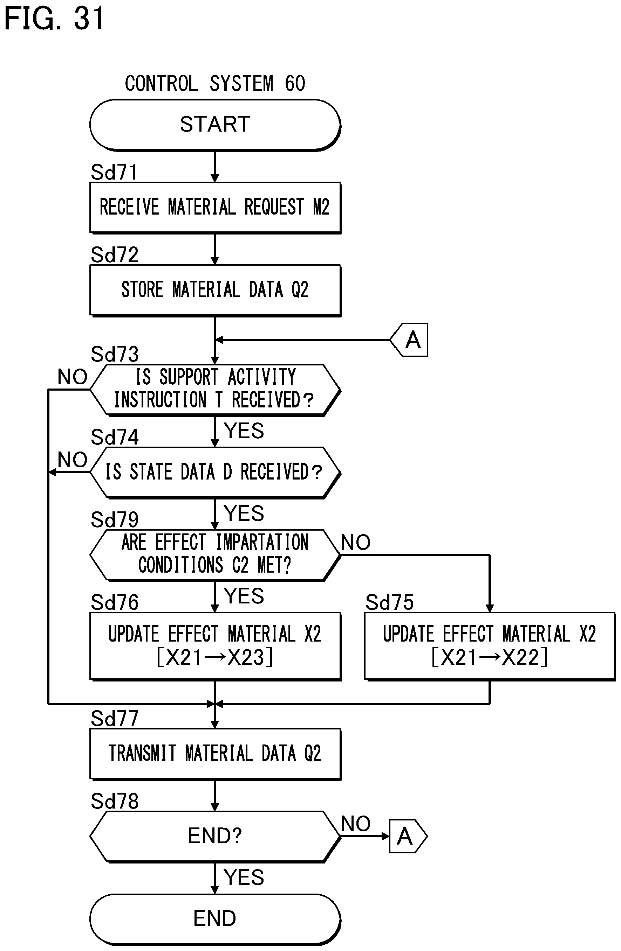

FIG. 31 is a flowchart of procedures executed by the controller 61 of the control system 60 in the edit processing. In the third embodiment, the procedures shown in FIG. 14 in the second embodiment are replaced with the procedures shown in FIG. 29.

Upon receiving a material request M2 (Sd71) and storing the material data Q2 (Sd72), the controller 61 (the condition determination section 615) of the control system 60 determines whether a supporting activity instruction T has been received from the terminal apparatus 10 via the communication device 63 (Sd73). Upon receiving the supporting activity instruction T (Sd73: YES), the controller 61 of the control system 60 (condition determination section 615) determines whether the state data D has been received from the gaming device 20 (Sd74).

When the state data D is received (Sd74: YES), the controller 61 (the condition determination section 615) uses the state data D to determine whether any of the effect impartation conditions C2 registered in the reference data R2 is met (Sd79). When no effect impartation conditions C2 are met (Sd79: NO), the controller 61 (the material data control section 613) updates the material data Q2 such that the effect material X2 includes a display element X22 (Sd75). In contrast, when the effect impartation conditions C2 are met (Sd79: YES), the controller 61 (the material data control section 613) updates the material data Q2 such that the effect material X2 includes a display element X23 (Sd76). When the state data D has not yet been received (Sd74: NO), updating of the material data Q2 is not executed (Sd75 and Sd76). The transmission of the material data Q2 to the editing system 30 (Sd77) and other similar actions are the same as those in the second embodiment.

The third embodiment provides the same effects as those of the second embodiment. In the third embodiment, the condition determination section 615 of the control system 60 determines whether the effect impartation conditions C2 are met. As a result, compared with a configuration in which such a determination is executed by the gaming device 20, processing load on the gaming device 20 is reduced. In contrast, in the second embodiment, the gaming device 20 determines whether the effect impartation conditions C2 are met. As compared with a configuration in which such a determination is executed by the control system 60, processing load thereon is reduced.

### Fourth Embodiment

In the fourth embodiment, a mode for supporting activities is indicated by a supporting activity instruction T from each terminal apparatus 10. The mode for supporting activities represents a condition or an attribute of support for the user U by the viewer A. For example, the support amount W of the value media in the second embodiment is a mode for supporting activities and is indicated by the supporting activity instruction T. As described above, the support amount W is freely set by the viewer A.

How to support the user U (hereinafter, "support method") may be selectable by the viewer A from among more than one option. In this case, the support method selected by the viewer A is a mode for supporting activities and is designated for a supporting activity instruction T. Examples of the support method include provision of either currencies, points, or game items. Examples of the game items to be provided from the viewer A to the user U include objects that are available in the baseball video games or other video games. When a game item to be provided to the user U is selectable by the viewer A from among more than one option, the game item selected by the viewer A is a mode for supporting activities and is designated for a supporting activity instruction T.

At Step Sd75 or Sd76 shown in FIG. 26, the material data control section 613 according to the fourth embodiment controls an effect material X2 based on the mode for supporting activities indicated by the supporting activity instruction T. For example, the material data control section 613 updates the effect material X2 such that its image differs between the following scenarios (i) and (ii): (i) the support amount W, which is designated as the mode for supporting activities, exceeds a predetermined threshold; and (ii) the support amount W is below the threshold. When the support method (e.g., currencies, points and game items), which is a mode for supporting activities, is indicated by a supporting activity instruction T, the material data control section 613 updates the effect material X2 such that its image differs between the following scenarios (i) and (ii): (i) a first support method is selected; and (ii) a second support method is selected other than the first support method. When any of the types of game items is selected by the viewer A, the material data control section 613 updates the effect material X2 such that its image differs between the following scenarios (i) and (ii): (i) a first game item is selected; and (ii) a second game item is selected other than the first game item.

The fourth embodiment provides the same effects as those of the second embodiment. In the fourth embodiment, the effect material X2 is controlled based on the mode for supporting activities set by the viewer A. That is, the instructions given by the viewer A are reflected in the effect material X2. As a result, it is possible to provide the viewer A with an effective incentive to support for the user U. The configuration of the third embodiment is applied to that of the fourth embodiment.

### Modifications

The foregoing embodiments may be variously modified. Specific modifications applicable to each of the aspects described above are set out below. More than one mode selected from the following descriptions may be combined, as long as such combination does not give rise to any conflict.

(1) The effect impartation conditions C (C1 and C2) are not limited to the foregoing embodiments. For example, in a competitive video game, such as a baseball video game, there may be set effect impartation conditions C for the user U's team, and effect impartation conditions C for the opponent's team. When the effect impartation conditions C for the user U's team are met, effect materials X (X1 and X2) with positive atmosphere may be shown. When the effect impartation conditions C for the opponent's team are met, effect materials X (X1 and X2) with negative atmosphere may be shown.

Each of the effect impartation conditions C (C1 and C2) may include a variable relating to the baseball video game. In the baseball video game, each effect impartation condition C may be set to a variety of variables, such as the distance of a home run by a batter, the total number of triples gained by a pitcher, and the number of bases stolen by a runner. Each effect impartation condition C may be a numerical value of a variable exceeding a predetermined threshold. When the numerical value of the variable changes based on the progress of the baseball video game and when the numerical value exceeds the threshold, it is determined that the effect impartation condition C is met. According to this aspect, it is possible to control the effect materials X (X1 and X2) based on the numerical values of the variables relating to the baseball video game. For example, each effect material X is updated such that its image differs between the following scenario (i) and (ii): (i) the numerical value of the variable exceeds the threshold; and (ii) the numerical value is below the threshold.

It is envisaged that a specific object (hereinafter, "target object") is disposed in a virtual space in which baseball games are played. For example, the target object may be a billboard behind audience seats in a virtual stadium. The condition setting section 213 may set the effect impartation conditions C (C1 and C2) for an event in which a ball of a player character hits the target object. When such effect impartation conditions C are met, the material data control section 413 and the material data control section 613 each update the effect materials X (X1 and X2) to special images, which are images for the viewer A to receive provision of specific products or services. The special images include application codes (e.g., QR codes (registered trademark)), which are used by the viewer A to apply for a product or service campaign. According to this aspect, the viewer A can be motivated to watch distributed content items V, and specific products or services can be advertised. As a result, it is possible to achieve effective cooperation between businesses providing products or services and the user U providing distribution content items V.

(2) In the foregoing embodiments, an example is given in which any of the options may be selected by the user U as any of the effect impartation conditions C (C1 and C2). However, it is envisaged that details of each effect impartation condition C are freely set by the user U. Similarly for the control modes P (P1 and P2), it is envisaged that any of the options is selected by the user U as a control mode P. In addition, it is envisaged that the details of each control mode P are freely set by the user U. Furthermore, it is envisaged that an association of an effect impartation condition C with a control mode P is set in advance. When any effect impartation condition C is selected by the user U, a control mode P associated with the effect impartation condition C is automatically selected.
(3) In the second embodiment, an example is given in which the control systems 40 and 60 each communicate directly with the gaming device 20. However, the control system 60 may communicate with the gaming device 20 via the control system 40. For example, unit data Z (Z1 and Z2) generated by the condition setting section 213 are transmitted from the gaming device 20 to the control system 40, and then is transmitted from the control system 40 to the control system 60. From among the plurality pieces of unit data Z received by the control system 40 from the gaming device 20, only unit data Z2 related to the control system 60 may be selectively transmitted from the control system 40 to the control system 60. Alternatively, all the plurality pieces of unit data Z received by the control system 40 from the gaming device 20 may be transmitted from the control system 40 to the control system 60.

Although description is given of unit data Z, state data D (D, D1 and D2) in the foregoing embodiments may be transmitted to the control system 60 via the control system 40. That is, the state data D may be transmitted from the gaming device 20 to the control system 40 and then may be transmitted from the control system 40 to the control system 60. From among the plurality pieces of state data D (D1 and D2) received by the control system 40 from the gaming device 20, only state data D2 relating to the control system 60 may be selectively transmitted from the control system 40 to the control system 60. All the plurality pieces of state data D received by the control system 40 from the gaming device 20 may be transmitted to the control system 60 from the control system 40.

(4) In the foregoing embodiments, an example is given in which each of the effect materials X (X1 and X2) includes an image. However, each effect material X may include a sound. In addition to the foregoing embodiments in which each effect material X includes only an image, it is envisaged that each effect material X includes an image and a sound, or it includes only a sound. When each effect material X includes a sound, the sound is included in the sound of the distribution content item V. For example, the edit processing section 312 generate a sound of the distribution content item V including sounds of a play material Xa, a recording material Xb, and effect materials X1 and X2. Alternatively, it is envisaged that the play material Xa includes only a sound, or the recording material Xb includes only a sound.
(5) In the foregoing embodiments, an example is given in which the gaming device 20 and the editing system 30 are separate from each other. However, the gaming device 20 and the editing system 30 may be unitary. That is, the recording system 2 may be a single device. Furthermore, in the foregoing embodiments, an example is given in which the editing system 30 and the distribution system 50 are separate from each other. However, the editing system 30 and the distribution system 50 may be unitary. That is, the editing system 30 may include the function of transmitting to each terminal apparatus 10, a distribution content item V generated by the edit processing section 312.
(6) In the foregoing embodiments, an example is given in which the user U operates the input operation device 35 to enter into the editing system 30 address information L (L1 and L2) shown on the display 241 of the gaming device 20. However, the configuration for the editing system 30 to acquire the address information L is freely selectable. It is envisaged that the address information L is transmitted by wired or wireless from the gaming device 20 to the editing system 30. Furthermore, when a readable graphic image representing address information L (e.g., QR code (registered trademark)) is shown on the display 241, the recording device 36 of the editing system 30 (camera) may optically read the image, and the editing system 30 may acquire address information L. When the gaming device 20 and the editing system 30 are unitary, the address information L shown by the information notification section 215 may be copied and pasted by the user U to an edit screen of the distribution content item V.
(7) In the foregoing embodiments, a material request M1 including the address information L1 is transmitted from the editing system 30 to the control system 40. However, instead of the address information L1, the material request M1 including identification information Uid of the user U may be transmitted from the editing system 30 to the control system 40. The material data transmission section 414 of the control system 40 transmits to the requesting editing system 30, material data Q1 associated with the identification information Uid included in the material request M1. As will be apparent from the description, the transmission and reception of the address information L1 between the recording system 2 and the control system 40 may be omitted. The same omission applies to address information L2. Instead of the address information L2, a material request M2 including the identification information Uid of the user U may be transmitted from the editing system 30 to the control system 60. The material data transmission section 614 of the control system 60 transmits to the requesting editing system 30, the material data Q2 associated with the identification information Uid included in the material request M2. The transmission and reception of the address information L2 between the recording system 2 and the control system 60 may be omitted.
(8) In the foregoing embodiments, an example is given in which the condition setting section 213, which sets the control conditions Y1 and Y2, is included in the gaming device 20. However, the condition setting section 213 may be included in an information processing apparatus separate from the gaming device 20. For example, setting data S1 and S2 may be generated by the information processing apparatus in accordance with instructions from the user U, and they may be provided from the information processing apparatus to the gaming device 20 via the network 3.
(9) In the foregoing embodiments, the example is given of a baseball video game. However, the type of video game to which this invention is applied is freely selectable. A variety of effect impartation conditions C (C1 and C2) are set based on the type of the video game.

The foregoing embodiments may be applied to a video game other than the baseball video game. Examples of the effect impartation conditions C (C1-b and C2-b) in a soccer video game include an occurrence of a variety of events, such as "shooting a goal," "score," "off-side," and "foul." In addition, examples of the effect impartation conditions C (C1-b and C2-b) in a fighting video game include an occurrence of a variety of events, such as "an occurrence of a specific finisher," "an occurrence of a combo greater than a predetermined number of times," "knockout," and "down." This invention may be applied to one-to-one competitive video games as well as to competitive video game in which a user U plays against many opponents (e.g., a battle royal game). Furthermore, it is envisaged that the user U plays against physical opponents as well as virtual opponents (player characters, also called CPU players) in the competitive video game.

This invention may be applied to video games played by a user U alone in addition to competitive video games. For example, this invention may be applied to explore video games in which a game character operated by a user U explores a virtual world. In addition to such video games, this invention may be applied to any type of the video games regardless of the number of players or relationships thereof. Examples of such video games include a lottery video game in which lottery processing, such as an electronic lottery, is executed; a music video game in which a user U performs actions with music; and an action video game in which a user U achieves a variety of purposes by operating the game character.

(10) In the first embodiment, an example is given of the information system 1 including the control system 40. In the second embodiment, an example is given of the information system 1 including the control systems 40 and 60. However, the control system 40 may be omitted from the information system 1.
(11) The function of the control system 40 according to each of the foregoing forms is realized by the cooperation of one or more processors (controller 41) and the program. Further, the function of the control system 60 according to each of the foregoing forms is realized by cooperation between one or more processors (controller 61) and the program. Programs according to each of the foregoing forms may be provided and installed on a computer in a form stored on a computer readable recording medium. For example, the computer-readable recording medium may be a non-transitory recording medium, examples of which include an optical recording medium (optical disk), such as a CD-ROM. The computer-readable recording medium may be a known recording medium, such as a semiconductor recording medium, or a magnetic recording medium. The non-transitory recording medium includes any recording medium excluding a transitory propagating signal. A volatile recording medium is not excluded. When programs are distributed by a distribution device via the network 3, a storage device included in the distribution device corresponds to the non-transient recording medium.

### Appendices

The following preferred aspects of this invention are derivable from the foregoing embodiments. For clarifying these aspects, reference numerals of the drawings are indicated in parentheses for convenience. However, it is not intended to limit this invention to the shown aspects.

### Appendices A

A variety of techniques has been proposed for editing a video game image representative of progress of a video game. For example, Japanese Patent No. 6098691 discloses a configuration for generating a content item using video game data representing a state of a video game and synthesizing the content item into the video game image.

It is widely known that users broadcast live gameplay, in which progress images of a video game being played by the own user are distributed in conjunction with progress of the video game. It is difficult for such a technique to generate a variety of content items reflecting intentions or preferences of users because information on progress of the video game is merely incorporated into a video game image. In view of these circumstances, one aspect of this invention (Appendix A) is to generate a variety of distribution content items reflecting intentions or preferences of users.

### Appendix A1

A control system (40) according to one aspect (Appendix A1) of this invention is a control system that assists generation of a distribution content item (V) representing progress of a video game played by a user (U). The control system (40) includes the following (i) to (iii): (i) an information provision section (412) configured to provide the user (U) with address information (L1) representing an address of material data (Q1) on an effect material (X1) used for the distribution content item (V); (ii) under a control condition (Y1) set in accordance with instructions from the user (U), a material data control section (413) configured to update the material data (Q1) in conjunction with the progress of the video game played by the user (U); and (iii) in conjunction with the progress of the video game played by the user (U), a material data transmission section (414) configured to transmit the material data (Q1) to the editing system (30) based on a request (M1) that uses the address information (L1) from an editing system (30) that generates the distribution content item (V).

In this aspect, the material data (Q1) is transmitted from the control system (40) to the editing system (30) by use of the address information (L1) and is updated under the control condition (Y1) based on the instructions from the user (U). As a result, it is possible to generate a variety of distribution content items (V), each including the effect material (X1) that reflects intentions or preferences of the user (U). In addition, simple processing, that is, setting the address information (L1) to the distribution content item (V), enables the effect material (X1) used for the distribution content item (V) to be updated in conjunction with the progress of the video game played by the user (U).

The term "content item" refers to information created for viewers. The term "distribution content item (V)" includes at least one of an image (e.g., a still image, a video or a string of characters) and a sound. The phrase "distribution content item (V) representing the progress of the video game" refers to a content item includes an image representing the progress of the video game. An image shown for a video game player may or may not be the same as a video game image included in the distribution content item (V).

The term "effect material (X1)" is an element included in the distribution content item (V) for rendering. The effect material (X1) includes at least one of an image (e.g., a still image, a video or a string of characters) and a sound. Thus, at least one of an image and a sound for rendering is included in the distribution content item (V), which is an example of an "effect material (X1)."

The term "address information (L1)" refers to data representing an address of the material data (Q1). Examples of the "address information (L1)" include a URL indicating an address of the stored material data (Q1). The address information (L1) may be transmitted to a gaming device that controls progress of the video game. Methods for presenting the address information (L1) to the user (U) may be freely chosen. Examples of the methods include showing the address information (L1) on a display, and showing a readable graphic image (e.g., QR code (Registered Trademark)) representing the address information (L1).

The term "control condition (Y1)" is used to control the effect material (X1) and is set in accordance with instructions from the user (U) playing the video game. Examples of the "control condition (Y1)" include a basic condition (B1) of whether the material data (Q1) is updated based on the progress of the video game, and an effect impartation condition (C1) that is met based on the progress of the video game. The phrase "updating the material data (Q1) under the control condition (Y1)" means that updating of the material data (Q1) depends on whether the control condition (Y1) is met. It is envisaged that the material data (Q1) is updated when the control condition (Y1) is met.

The term "editing system (30)" is a computer system that generates a distribution content item (V). For example, a computer system that is separate from the gaming device for controlling the video game may be used as the "editing system (30)." A route to acquire the address data (L1) by the editing system (30) is freely selected. Examples of the route include the following (i) to (iii): (i) the address information (L1) is input manually into the editing system (30) by the user (U); (ii) the address information (L1) is transmitted to the editing system (30) from a device (e.g., a gaming device) that has received the address information (L1); and (iii) the address information (L1) provided as an computer-readable image is read by the editing system (30). A single system may include functions to progress the video game and generate the distribution content item (V). It is envisaged that the editing system 30 acts as a gaming device.

### Appendix A2

In an example (Appendix A2) according to Appendix A1, the control condition (Y1) includes a basic condition (B1) relating to whether the material data (Q1) is to be updated.

According to this aspect, the user (U) can freely select to update the material data (Q1). In one embodiment, the control condition (Y1) includes the basic condition (B1) relating to whether the material data (Q1) is to be updated. When the basic condition (B1) shows updating of the material data (Q1), which means an active state, the material data control section (413) updates the material data (Q1). When the basic condition (B1) shows no updating of the material data (Q1), which means an inactive state, the material data control section (413) stops the updating thereof.

### Appendix A3

In an example (Appendix A3) according to Appendix A1 or A2, the control condition (Y1) includes an effect impartation condition (C1) relating to the progress of the video game.

According to this aspect, an appropriate effect material (X1) can be included in the distribution content item (V) based on the state of the video game.

### Appendix A4

In an example (Appendix A4) according to Appendix A3, the effect impartation condition (C1) includes a condition (C1-a) relating to a time point in the video game.

According to this aspect, the material data (Q1) is updated based on whether a specific time point in the video game has arrived. Specifically, the material data control section (413) updates the material data (Q1) when a specific time arrived in the video game (i.e., when the effect impartation condition (C1) is met). As a result, a distribution content item (V) reflecting effective rendering of arrival of the specific time point in the video game can be generated.

The phrase "specific time point in the video game" refers to a time point that arrives based on the progress of the video game. Examples of the "condition relating to a time point in the video game" include arrival of a specific inning in a baseball video game, and arrival of a first half endpoint (i.e., a half-time starting point) in a soccer video game.

### Appendix A5

In an example (Appendix A5) according to Appendix A3 or A4, the effect impartation condition (C1) includes a condition (C1-c) relating to a virtual place in the video game.

According to this aspect, updating of the material data (Q1) is controlled based on the virtual place in the video game. As a result, the effect material (X1) provides effective rendering of a specific place.

### Appendix A6

In an example (Appendix A6) according to any of Appendices A3 to A5, the effect impartation condition (C1) includes a condition (C1-b) relating to an event that will occur in the video game.

According to this aspect, updating of the material data (Q1) is controlled based on whether a specific event has occurred in the video game. Specifically, the material data control section (413) updates the material data (Q1) when the specific event occurred in the video game. As a result, the distribution content item (V) reflecting effective rendering of an occurrence of the specific event can be generated.

### Appendix A7

In an example (Appendix A7) according to Appendix A6, the event includes an event relating to a specific game character in the video game.

According to this aspect, updating of the material data (Q1) is controlled based on whether the event relating to a specific game character has occurred. Specifically, the material data control section (413) updates the material data (Q1) when the specific game character appears or acts. As a result, the distribution content item (V) reflecting effective rendering of a situation of the specific character can be generated. For example, the phrase "event relating to the specific game character" refers to an event in which a specific game character appears or acts.

### Appendix A8

In an example (Appendix A8) according to Appendix A6 or A7, the event includes an event relating to a specific action performed by a game character in the video game.

According to this aspect, updating of the material data (Q1) is controlled based on whether the game character has taken a specific action in the video game. For example, the material data control section (413) updates the material data (Q1) when the game character takes a specific action. As a result, the distribution content item (V) reflecting effective rendering of a specific action performed by the game character can be generated.

For example, the phrase "event relating to a specific action" refers to an event in which the game character in the video game performs an action. Examples of the "event relating to a specific action" include an action by which a game character hits a home run in a baseball video game, and an action by which a game character shoots a goal in a soccer video game. In a ball video game, such as a baseball or soccer video game, the material data (Q1) may be updated in response to an action by which the ball collides with a specific object in the virtual space. For example, the specific object corresponds to an advertisement billboard disposed in a stadium in the virtual space.

### Appendix A9

In an example (Appendix A9) according to any one of Appendices A1 to A8, the material data control section (413) is further configured to: receive state data (D1) representing a result of determination of whether the control condition (Y1) is met; and update the material data (Q1) based on the result of the determination indicated by the state data (D1).

According to this aspect, compared with a configuration in which the determination is executed by the control system (40), processing load on the control system (40) is reduced because the control system (40) receives the state data (D1) representing a result of the determination of whether the control condition (Y1) is met.

### Appendix A1 0

In an example (Appendix A10) according to any one of Appendices A1 to A8, the control system further includes a condition determination section (415) configured to: receive state data (D1) representing a state of the video game; and determine whether the control condition (Y1) is met, using the state data (D1). The material data control section (413) is further configured to update the material data (Q1) based on a result of a determination by the condition determination section (415).

According to this aspect, compared with a configuration in which the determination is executed by the gaming device, processing load on the gaming device is reduced because the condition determination section (415) of the control system (40) determines whether the control condition (Y1) is met.

### Appendix A11

An information system (1) according to one aspect (Appendix A11) of this invention includes: a recording system (2); and a control system (40). The recording system (2) includes the following (i) to (iv): (i) a game control section (211) configured to progress a video game played by a user (U); (ii) a condition setting section (213) configured to set a control condition (Y1) in accordance with instructions from the user (U); (iii) a material data acquisition section (311) configured to acquire material data (Q1) on an effect material (X1) from the control system (40); and (iv) an edit processing section (312) configured to generate a distribution content item (V) including: a play material (Xa) representing progress of the video game, and the effect material (X1) indicated by the material data (Q1). The control system (40) includes the following (i) to (iii): (i) an information provision section (412) configured to provide the user (U) with address information (L1) representing an address of the material data (Q1); (ii) under the control condition (Y1), a material data control section (413) configured to update the material data (Q1) in conjunction with the progress of the video game played by the user (U); and (iii) in conjunction with the progress of the video game played by the user (U), a material data transmission section (414) configured to transmit the material data (Q1) to the recording system (2) based on a request (M1) that uses the address information (L1) from the recording system (2).

For example, the recording system (2) includes the following (i) and (ii): (i) a gaming device including the game control section (211) and the condition setting section (213); and (ii) an editing system (30) including the material data acquisition section (311) and the edit processing section (312). However, it is envisaged that a single recording system (2) includes the condition setting section (213), the game control section (211), the material data acquisition section (311), and edit processing section (312). he number of elements of the recording system (2), and functions included in each element of the recording system (2) are freely selected.

### Appendix A12

An information processing method according to one aspect (Appendix A12) of this invention is a method for assisting generation of a distribution content item (V) representing progress of a video game played by a user (U). The information processing method includes the following (i) to (iii): (i) providing the user (U) with address information (L1) representing an address of material data (Q1) on an effect material (X1) used for the distribution content item (V); (ii) under a control condition (Y1) set in accordance with instructions from the user (U), updating the material data (Q1) in conjunction with the progress of the video game played by the user (U); and (iii) in conjunction with the progress of the video game played by the user (U), transmitting the material data (Q1) to the editing system (30) based on a request (M1) that uses the address information (L1) from an editing system (30) that generates the distribution content item (V).

### Appendix A13

A program according to one aspect (Appendix A13) of this invention is a program for assisting generation of a distribution content item (V) representing progress of a video game played by a user (U). The program causes a computer system to function as the following (i) to (iii): (i) an information provision section (412) configured to provide the user (U) with address information (L1) representing an address of material data (Q1) on an effect material (X1) used for the distribution content item (V); (ii) under a control condition (Y1) set in accordance with instructions from the user (U), a material data controller (413) configured to update the material data (Q1) in conjunction with the progress of the video game played by the user (U); and (iii) in conjunction with the progress of the video game played by the user (U), a material data transmission section (414) configured to transmit the material data (Q1) to the editing system (30) based on a request (M1) that uses the address information (L1) from an editing system (30) that generates the distribution content item (V).

### Appendix A14

A control system (40) according to one aspect (Appendix A14) of this invention is a control system (40) that assists generation of a distribution content item (V) representing progress of a video game played by a user (U). The control system (40) includes the following (i) and (ii): (i) under a control condition (Y1) set in accordance with instructions from the user (U), a material data control section (413) configured to update material data (Q1) on an effect material (X1) used for the distribution content item (V) in conjunction with the progress of the video game played by the user (U); and (ii) in conjunction with the progress of the video game played by the user (U), a material data transmission section (414) configured to transmit the material data (Q1) to an editing system (30) that generates the distribution content item (V).

### Appendix A15

In an example (Appendix A15) according to Appendix A14, the control system further includes an information provision section (412) configured to provide the user (U) with address information (L1) representing an address of the material data (Q1) on the effect material (X1) used for the distribution content item (V). The material data transmission section (414) is further configured to transmit the material data (Q1) to the editing system (30) based on a request (M1) that uses the address information (L1) from the editing system (30).

### Appendices B

A variety of techniques has been proposed for distributing user-created content items to viewers. For example, Japanese Patent No. 6001757 discloses a technique for enabling viewers to express favorable feelings toward content item distributors, upon purchase or use of chargeable or nonchargeable game items. However, such a technique of Patent Document 1 shows that visual effects only change based on whether game items used by the viewers are chargeable. Rendering of the content items tend to be monotonous, and it is difficult to provide the viewers with a significant incentive to use the game items. In view of the circumstances, one aspect of this invention is to diversify rendering of distribution content items relating to instructions from the viewers.

### Appendix B1

A control system (60) according to one aspect of this invention (Appendix B1) is a control system that assists generation of a distribution content item (V) representing progress of a video game. The control system (60) includes the following (i) and (ii): (i) a material data control section (613) configured to update material data (Q2) on an effect material (X2) used for the distribution content item (V) in conjunction with the progress of the video game, based on the following (i-a) and (i-b): (i-a) a supporting activity instruction (T) indicating that a viewer (A) of the distribution content item (V) supports playing activity of the video game; and (i-b) state data (D2) representing a state of the video game; and (ii) a material data transmission section (614) configured to transmit the material data (Q2) to an editing system (30) that generates the distribution content item (V) in conjunction with the progress of the video game.

In this aspect, the material data (Q2) on the effect material (X2) used for the distribution content item (V) is updated based on the supporting activity instruction (T) from the viewer (A) of the distribution content item (V), and the state of the video game. For example, the effect material (X2) is shown on the distribution content item (V) based on the support instruction (T), and a mode of the effect material (X2) changes based on the state of the video game. As a result, the rendering relating to the supporting activity instruction (T) from the viewer (A) is diversified in the distribution content item (V). It is possible to provide the viewer (A) with a significant incentive to issue the support instruction (T).

The term "distribution content item (V)" includes at least one of an image (e.g., a still image, a video or a string of characters) and a sound. The phrase "distribution content item (V) representing the progress of the video game" refers to a content item that includes an image representing the progress of the video game. An image shown for a video game player may or may not be the same as a video game image included in the distribution content item (V).

The actual player playing the video game may be a user (distributor) who generates the distribution content item (V) or may be a user other than the distributor.

The term "effect material (X2)" is an element of the distribution content item (V) for rendering. The effect material (X2)" includes at least one of an image (e.g., a still image, a video or a string of characters) and a sound. Thus, at least one of an image and a sound for rendering is included in the distribution content item (V), which is an example of an "effect material (X2)."

The term "supporting activity instruction (T)" is an instruction provided by the viewer (A) for support relating to playing of the video game. A preferred example of the "supporting activity" by the viewer (A) refers to a chargeable supporting activity including provision of value media (so called social tipping). The provision of the value media includes direct provision of value media such as money, or provision of game items that are obtained in exchange for value media (i.e., indirect provision of value media). The supporting activity by the viewer (A) may or may not be chargeable (i.e., the provision of the value media may or may not be included).

The editing system (30) is a computer system that generates the distribution content item (V). In one example, a computer system that is independent from the gaming device, which controls the video game, may be used as the "editing system (30)." A single system may include functions to progress the video game and generate the distribution content item (V). It is envisaged that the editing system 30 acts as a gaming device.

The phrase "updating the material data (Q2) based on the supporting activity instruction (T) and the state of the video game" means that the effect material (X2) indicated by the material data (Q2) changes based on a set of the following (i) and (ii): i) a mode of the supporting activity instruction (T), or it is whether there is the supporting activity instruction (T); and (ii) the state of the video game.

It is envisaged that the effect material (X2) shown in accordance with the supporting activity instruction (T) changes based on the state of the video game. The mode of the supporting activity instruction (T) refers to a condition relating to the supporting activity instruction (T), for example, a condition relating to a quantity, or a type of the value media provided by the viewer (A).

### Appendix B2

In an example (Appendix B2) according to Appendix B1, the control system further includes an information provision section (612) configured to provide a user (U) who makes the distribution content item (V) with address information (L2) representing an address of the material data (Q2), and the material data transmission section (614) is further configured to transmit the material data (Q2) to the editing system (30) based on a request (M2) that uses the address information (L2) from the editing system (30).

According to this aspect, simple processing, that is, setting the address information (L2) to the distribution content item (V), enables the effect material (X2) used for the distribution content item (V) to be updated in conjunction with the progress of the video game.

The term "address information (L2)" refers to data representing an address of the material data (Q2). Examples of the "address information (L2)" include a URL representing an address of the stored material data (Q2). The address information (L2) may be transmitted to a gaming device that controls progress of the video game. Methods for presenting the address information (L2) to the user (U) may be freely chosen. Examples of the methods include showing the address information (L2) on a display, and showing a readable graphic image (e.g., QR code (Registered Trademark)) representing the address information (L2).

A route to acquire the address data (L2) by the editing system (30) may be freely chosen. Examples of the route include the following (i) to (iii): (i) the address information (L2) is input manually into the editing system (30) by the user (U); (ii) the address information (L2) is transmitted to the editing system (30) from a device (e.g., a gaming device) that has received the address information (L2); and (iii) the address information (L2) provided as a computer-readable image is read by the editing system (30).

### Appendix B3

In an example (Appendix B3) according to Appendix B1 or B2, the material data control section (613) is further configured to update the material data (Q2) under a control condition (Y2) set in accordance with instructions from the user (U).

In this aspect, the material data (Q2) is transmitted from the control system (60) to the editing system (30) and is updated under the control condition (Y2) based on instructions from the user (U). As a result, it is possible to generate a variety of distributed content items (V), each including the effect material (X2) that reflects intentions or preferences of the user (U).

### Appendix B4

In an example (Appendix B4) according to Appendix B3, the control condition (Y2) includes a basic condition (B2) relating to whether the material data (Q2) is to be updated.

According to this aspect, the user (U) can freely select to update the material data (Q2). In one embodiment, the control condition (Y2) includes the basic condition (B2) relating to whether the material data (Q2) is to be updated. When the basic condition (B2) shows updating of the material data (Q2), which means an active state, the material data control section (613) updates the material data (Q2). When the basic condition (B2) shows no updating of the material data (Q2), which means an inactive state, the material data control section (613) stops the updating of the material data (Q2).

### Appendix B5

In an example (Appendix B5) according to Appendix B3 or B4, the control condition (Y2) includes an effect impartation condition (C2) relating to the progress of the video game.

According to this aspect, an appropriate effect material (X2) can be included in the distribution content item (V) based on the state of the video game.

### Appendix B6

In an example (Appendix B6) according to Appendix B5, the effect impartation condition (C2) includes a condition (C2-a) relating to a time point in the video game.

According to this aspect, the material data (Q2) is updated based on whether a specific time point in the video game has arrived. Specifically, the material data control section (613) updates the material data (Q2) when a specific time has arrived in the video game (i.e., when the effect impartation condition (C2) is met). As a result, a distribution content item (V) reflecting effective rendering of arrival of the specific time point in the video game can be generated.

The phrase "specific time point in the video game" refers to a time point that arrives based on the progress of the video game. Examples of the "condition relating to a time point in the video game" include start of a specific inning in a baseball video game, and start of a first half endpoint (i.e., a half-time starting point) in a soccer video game.

### Appendix B7

In an example (Appendix B7) according to Appendix B5 or B6, the effect impartation condition (C2) includes a condition (C2-c) relating to a virtual place in the video game.

According to this aspect, updating of the material data (Q2) is controlled based on the virtual place in the video game. As a result, the effect material (X2) provides effective rendering of a specific place.

### Appendix B8

In an example (Appendix B) according to any of Appendices B5 to B7, the effect impartation condition (C2) includes a condition (C2-b) relating to an event that will occur in the video game.

According to this aspect, updating of the material data (Q2) is controlled based on whether a specific event has occurred in the video game. Specifically, the material data control section (613) updates the material data (Q2) when the specific event has occurred in the video game. As a result, the distribution content item (V) reflecting effective rendering of an occurrence of the specific event can be generated.

### Appendix B9

In an example (Appendix B9) according to Appendix B8, the event includes an event relating to a specific game character in the video game.

According to this aspect, updating of the material data (Q2) is controlled based on whether the event relating to a specific game character has occurred. Specifically, the material data control section (613) updates the material data (Q2) when the specific game character appears or performs an action. As a result, the distribution content item (V) reflecting effective rendering of a situation of the specific character can be generated. For example, the phrase "event relating to the specific game character" refers to an event in which a specific game character appears or performs an action.

### Appendix B10

In an example (Appendix B10) according to Appendix B8 or B9, the event includes an event relating to a specific action performed by a game character in the video game.

According to this aspect, updating of the material data (Q2) is controlled based on whether the game character has taken a specific action in the video game. For example, the material data control section (613) updates the material data (Q2) when the game character performs a specific action. As a result, the distribution content item (V) reflecting effective rendering of a specific action performed by the game character can be generated.

For example, the phrase "event relating to a specific action" refers to an event in which the game character in the video game performs an action. Examples of the "event relating to a specific action" include an action by which a game character hits a home run in a baseball video game, and an action by which a game character shoots a goal in a soccer video game. In a ball video game, such as a baseball or soccer video game, the material data (Q2) may be updated in response to an action by which the ball collides with a specific object in the virtual space. For example, the specific object corresponds to an advertisement billboard disposed in a stadium in the virtual space.

### Appendix B11

In an example (Appendix B 11) according to any one of Appendices B1 to B10, the material data control section (613) controls the effect material (X2) based on a mode for supporting activities indicated by the supporting activity instruction (T).

According to this aspect, the effect material (X2) is controlled based on the mode for supporting activities by the viewer (A) of the distribution content item (V). As a result, it is possible to provide the viewer (A) with an effective incentive to support for the user (U).

The term "mode for supporting activities " refers to a variety of conditions relating to the supporting activity instruction (T). Regarding a chargeable supporting activity (so called social tipping) including provision of value media, a quantity of value media provided by the viewer (A), which means a support amount, is an example of the "mode for supporting activities." When any of the types of support methods is selectable by the viewer (A), the selected type of the support methods is an example of the "mode for supporting activities."

### Appendix B12

An information system (1) according to one aspect (Appendix B12) of this invention includes: a recording system (2); and a control system (60).

The recording system (2) includes the following (i) and (ii): (i) a material data acquisition section (311) configured to acquire material data (Q2) on an effect material (X2) from the control system (60); and (ii) an edit processing section (312) configured to generate a distribution content item (V) including: a game play material (Xa) representing progress of a video game, and the effect material (X2) indicated by the material data (Q2).

The control system (60) includes the following (i) and (ii): (i) a material data control section (613) configured to update the material data (Q2) in conjunction with the progress of the video game, based on the following (i-a) and (i-b): (i-a) a supporting activity instruction (T) indicating that a viewer (A) of the distribution content item (V) supports playing activity of the video game; and (i-b) state data (D2) representing a state of the video game; and (ii) a material data transmission section (614) configured to transmit the material data (Q2) to an editing system (30) that generates the distribution content item (V) in conjunction with the progress of the video game.

In one example, the recording system (2) includes the following (i) and (ii): (i) a gaming device including the game control section (211); and (ii) the editing system (30) including the material data acquisition section (311) and the edit processing section (312). However, it is envisaged that a single recording system (2) includes the game control section (211), the material data acquisition section (311) and the edit processing section (312). The number of elements of the recording system (2) and functions included in each element thereof may be freely selected.

### Appendix B13

An information processing method according to one aspect (Appendix B13) of this invention is a method for assisting generation of a distribution content item (V) representing progress of a video game. The information processing method includes the following (i) to (iii): (i) updating material data (Q2) on an effect material (X2) used for the distribution content item (V) in conjunction with the progress of the video game, based on the following (i-a) and (i-b): (i-a) a supporting activity instruction (T) indicating that a viewer (A) of the distribution content item (V) supports playing activity of the video game; and (i-b) state data (D2) representing a state of the video game; and (ii) transmitting the material data (Q2) to an editing system (30) that generates the distribution content item (V) in conjunction with the progress of the video game.

### Appendix B14

A program according to one aspect (Appendix B14) of this invention is a program for assisting generation of a distribution content item (V) representing progress of a video game. The program causes a computer system to function as the following (i) and (ii): (i) a material data control section (613) configured to update material data (Q2) on an effect material (X2) used for the distribution content item (V) in conjunction with the progress of the video game, based on the following (i-a) and (i-b): (i-a) a supporting activity instruction (T) indicating that a viewer (A) of the distribution content item (V) supports playing activity of the video game; and (i-b) state data (D2) representing a state of the video game; and (ii) a material data transmission section (614) configured to transmit the material data (Q2) to an editing system (30) that generates the distribution content item (V) in conjunction with the progress of the video game.

### Description of Reference Signs

1... information system, 2... recording system, 3... network, 10... terminal apparatus, 11, 24 and 34... playback device, 111, 241 and 341... display, 112, 242, 342... sound emitting device, 12, 25 and 35... input operation device, 20... gaming device, 21, 31, 41 and 61... controller, 22, 32, 42 and 62... storage device, 23, 33, 43, 63... communication device, 24... playback device, 36... recording device, 40... control system, 50... distribution system, 60... control system, 211... game control section, 212... playback control section, 213, 411 and 611... condition setting section, 214... condition determination section, 215... information notification section, 311 ... material data acquisition section, 312... edit processing section, 412 and 612... information provision section, 413 and 613 ... material data control section, 414 and 614... material data transmission section, 415 and 615... condition determination section, 618... payment processing section.

## Claims

1. A control system that assists generation of a distribution content item representing progress of a video game played by a user, the control system comprising:
an information provision section configured to provide the user with address information representing an address of material data on an effect material used for the distribution content item;
under a control condition set in accordance with instructions from the user, a material data control section configured to update the material data in conjunction with progress of the video game played by the user; and
in conjunction with the progress of the video game played by the user, a material data transmission section configured to transmit the material data to the editing system based on a request that uses the address information from an editing system that generates the distribution content item.

2. The control system according to claim 1, wherein the control condition includes a basic condition relating to whether the material data is to be updated.

3. The control system according to claim 1 or 2, wherein the control condition includes an effect impartation condition relating to the progress of the video game.

4. The control system according to claim 3, wherein the effect impartation condition includes a condition relating to a time point in the video game.

5. The control system according to claim 3 or 4, wherein the effect impartation condition includes a condition relating to a virtual place in the video game.

6. The control system according to any one of claims 3 to 5, wherein the effect impartation condition includes a condition relating to an event that will occur in the video game.

7. The control system according to claim 6, wherein the event includes an event relating to a specific game character in the video game.

8. The control system according to claim 6 or 7, wherein the event includes an event relating to a specific action performed by a game character in the video game.

9. The control system according to any one of claims 1 to 8, wherein the material data control section is further configured to:
receive state data representing a result of determination of whether the control condition is met; and
update the material data based on the result of the determination indicated by the state data.

10. The control system according to any one of claims 1 to 8, further includes a condition determination section configured to:
receive state data representing a state of the video game; and
determine whether the control condition is met, using the state data,
wherein the material data control section is further configured to update the material data based on a result of a determination by the condition determination section.

11. An information system comprising:
a recording system; and
a control system, wherein:
the recording system includes:
a game control section configured to progress a video game played by a user;
a condition setting section configured to set a control condition in accordance with instructions from the user;
a material data acquisition section configured to acquire material data on an effect material from the control system; and
an edit processing section configured to generate a distribution content item including:
a play material representing progress of the video game, and
the effect material indicated by the material data, and
the control system includes:
an information provision section configured to provide the user with address information representing an address of the material data;
under the control condition, a material data control section configured to update the material data in conjunction with the progress of the video game played by the user; and
in conjunction with the progress of the video game played by the user, a material data transmission section configured to transmit the material data to the recording system based on a request that uses the address information from the recording system.

12. An information processing method for assisting generation of a distribution content item representing progress of a video game played by a user, the information processing method comprising:
providing the user with address information representing an address of material data on an effect material used for the distribution content item;
under a control condition set in accordance with instructions from the user, updating the material data in conjunction with progress of the video game played by the user; and
in conjunction with the progress of the video game played by the user, transmitting the material data to the editing system based on a request that uses the address information from an editing system that generates the distribution content item.

13. A program for assisting generation of a distribution content item representing progress of a video game played by a user, the program causing a computer system to function as:
an information provision section configured to provide the user with address information representing an address of material data on an effect material used for the distribution content item;
under a control condition set in accordance with instructions from the user, a material data controller configured to update the material data in conjunction with progress of the video game played by the user; and
in conjunction with the progress of the video game played by the user, a material data transmission section configured to transmit the material data to the editing system based on a request that uses the address information from an editing system that generates the distribution content item.
